(19) Europäisches Patentamt
European Patent Office
Office européen des brevets

(11) EP 4 349 614 B1

(12) **EUROPEAN PATENT SPECIFICATION**

(45) Date of publication and mention of the grant of the patent:
**25.02.2026 Bulletin 2026/09**

(21) Application number: **22811037.5**

(22) Date of filing: **31.03.2022**

(51) International Patent Classification (IPC):
***B60C 1/00*** *(2006.01)* ***C08C 19/22*** *(2006.01)*
***C08C 19/25*** *(2006.01)* ***C08L 7/00*** *(2006.01)*
***C08L 9/06*** *(2006.01)* ***C08L 15/00*** *(2006.01)*
***C08L 101/00*** *(2006.01)* ***C08K 3/013*** *(2018.01)*

(52) Cooperative Patent Classification (CPC):
(C-Sets available)
**B60C 1/0016; C08L 7/00;** Y02T 10/86 (Cont.)

(86) International application number:
**PCT/JP2022/016932**

(87) International publication number:
**WO 2022/249763 (01.12.2022 Gazette 2022/48)**

(54) **RUBBER COMPOSITION FOR TIRE, TREAD RUBBER, AND TIRE**

KAUTSCHUKZUSAMMENSETZUNG FÜR REIFEN, LAUFFLÄCHENKAUTSCHUK UND REIFEN

COMPOSITION DE CAOUTCHOUC POUR PNEUMATIQUE, GOMME DE BANDE DE ROULEMENT, ET PNEUMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.05.2021 JP 2021090698**

(43) Date of publication of application:
**10.04.2024 Bulletin 2024/15**

(73) Proprietor: **BRIDGESTONE CORPORATION**
**Chuo-ku**
**Tokyo 104-8340 (JP)**

(72) Inventor: **KAWASHIMA, Masahiro**
**Tokyo 104-8340 (JP)**

(74) Representative: **Marks & Clerk LLP**
**15 Fetter Lane**
**London EC4A 1BW (GB)**

(56) References cited:
**EP-A1- 3 406 664** **WO-A1-2016/171020**
**WO-A1-2017/018386** **WO-A1-2017/126629**
**WO-A1-2019/117168** **WO-A1-2021/125242**
**JP-A- 2005 330 319** **JP-A- 2011 099 026**
**JP-A- 2014 214 297** **JP-A- 2017 043 712**
**JP-A- 2018 158 979** **JP-A- 2019 119 758**
**JP-A- 2019 131 648** **JP-A- 2020 059 778**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08L 7/00, C08L 9/06, C08K 3/013;**
**C08L 7/00, C08L 15/00, C08K 3/013**

**Description**

TECHNICAL FIELD

The present invention relates to a rubber composition for a tire, tread rubber, and a tire.

BACKGROUND ART

Various studies have conventionally been made for improving braking performance of a vehicle on a wet road surface (which braking performance will be referred to as "wet grip performance" hereinafter) in terms of enhancing safety of the vehicle. For example, PTL 1 referenced below discloses that application of a rubber composition containing: a rubber component including natural rubber by ≥ 70 mass %; a thermoplastic resin; and fillers including silica, to tread rubber of a tire, improves braking performance of the tire on each of a dry road surface and a wet road surface. Further, there has been a growing demand for reducing fuel consumption of automobiles in connection with the worldwide movement of restricting $CO_2$ emissions urged by recent strong interest in the environmental problems. There has been a request for improving fuel-saving performance (i.e., reducing rolling resistance) of a tire to meet the demand accordingly.
Yet further, there has been a request for improving wear resistance of a tire in economic terms, as well as the wet grip performance and the fuel-saving performance thereof described above, in development of a rubber composition for a tire.
PTL 2 relates to a tire rubber composition and a tire having a tire member composed of the tire rubber composition. PTL 3 relates to a rubber composition for a tread and a pneumatic tire. PTL 4 relates to a rubber composition, a tread and a tire.
PTL 5 (citable only under Article 54(3) EPC) relates to rubber compositions and tires.

CITATION LIST

Patent Literature

PTL 1: WO 2015/079703 A1

PTL 2: JP 2019 131-648 A

PTL 3: JP 2018 158-979 A

PTL 4: JP 2020 059-778 A

PTL 5: WO 2021/125242 A1

SUMMARY OF THE INVENTION

(Technical Problem)

However, the present inventor discovered, as a result of a keen study, that the technology disclosed in PTL 1 can somehow improve wet grip performance of a tire but still has room for improvement in terms of achieving satisfactory fuel-saving performance and wear resistance of the tire.
In view of this, an object of the present disclosure aiming at solving the prior art problems described above is to provide i) a rubber composition for a tire, which composition is capable of achieving satisfactory wet grip performance, satisfactory fuel-saving performance, and satisfactorily high wear resistance of the tire in a well-balanced manner and ii) a tread rubber made of the rubber composition.
Further, another object of the present disclosure is to provide a tire capable of achieving satisfactory wet grip performance, satisfactory fuel-saving performance, and satisfactorily high wear resistance in a well-balanced manner.

(Solution to Problem)

The primary features of the present disclosure for achieving the aforementioned objects are as follows.
A rubber composition for a tire, of the present disclosure, comprises a rubber component, a resin component, and a filler,
wherein:

the rubber component contains a rubber having isoprene skeleton and a styrene-butadiene rubber;
the styrene-butadiene rubber has a glass transition temperature lower than -40 °C;
a bound styrene content in the styrene-butadiene rubber is < 15 mass %;
a content of the resin component is in the range of ≥ 1 and < 50 parts by mass with respect to 100 parts by mass of the rubber component;
the resin component has been at least partially hydrogenated and a difference in SP value between the resin component and the isoprene skeleton rubber is ≤ 1.40 $(cal/cm^3)^{1/2}$; and
the rubber composition satisfies the formula shown below:
a mass ratio of the resin component/the isoprene skeleton rubber is ≥ 0.5.

The glass transition temperature of the styrene-butadiene rubber is determined by: recording a DSC curve of the SBR, with increasing the temperature thereof within a predetermined temperature range, according to ISO 22768: 2006; and regarding the inflection point of the DSC differential curve as the glass transition temperature of the SBR. Specifically, the glass transition temperature is measured by the method employed in Examples described below.
Further, each of SP (Solubility Parameter) values of the isoprene skeleton rubber, the styrene-butadiene rubber, and the resin component is calculated by Fedors Method in the present disclosure.
A tread rubber of the present disclosure is characterized in that it is made of the rubber composition for a tire described above.
A tire of the present disclosure is characterized in that it has the tread rubber described above.

(Advantageous Effect)

According to the present disclosure, it is possible to provide i) a rubber composition for a tire, which composition is capable of achieving satisfactory wet grip performance, satisfactory fuel-saving performance, and satisfactorily high wear resistance of the tire in a well-balanced manner and ii) a tread rubber made of the rubber composition.
Further, according to the present disclosure, it is possible to provide a tire capable of achieving satisfactory wet grip performance, satisfactory fuel-saving performance, and satisfactorily high wear resistance in a well-balanced manner.

DETAILED DESCRIPTION

Hereinafter, a rubber composition for a tire, tread rubber, and a tire of the present disclosure will be demonstratively described in detail based on embodiments thereof.

< Rubber composition for tire >

A rubber composition for a tire of the present disclosure contains a rubber component, a resin component, and a filler, wherein: the rubber component contains a rubber having isoprene skeleton (which is often referred to "isoprene skeleton rubber" in the present disclosure) and a styrene-butadiene rubber; the styrene-butadiene rubber has a glass transition temperature lower than -40 °C; a content of the resin component is in the range of ≥ 1 and < 50 parts by mass with respect to 100 parts by mass of the rubber component; the resin component has been at least partially hydrogenated and a difference in SP value between the resin component and the isoprene skeleton rubber is ≤ 1.40 $(cal/cm^3)^{1/2}$; and the rubber composition satisfies the formula shown below:
a mass ratio of the resin component/the isoprene skeleton rubber is ≥ 0.5.
First of all, in connection with the rubber composition for a tire of the present disclosure, it is possible to significantly improve wet grip performance of a tire having the rubber composition applied thereto by adding to the rubber composition, with respect to 100 parts by mass of the rubber component, at least 1 parts by mass of a resin component which has been at least partially hydrogenated and of which SP value differs from that of the isoprene skeleton rubber by 1.40 $(cal/cm^3)^{1/2}$ or less.
It should be noted in this regard that simply adding a resin component to the rubber composition may rather deteriorate fuel-saving performance and wear resistance of a tire having the rubber composition applied thereto. For example, fuel-saving performance and wear resistance of a tire having the rubber composition applied thereto would deteriorate when a content of the resin component is ≥ 50 parts by mass with respect to 100 parts by mass of the rubber component. In contrast, in the rubber composition for a tire of the present disclosure, such possible deterioration of fuel-saving performance and wear resistance as described above of a tire having the rubber composition applied thereto is well prevented or compensated with improvement of dispersibility of the fillers achieved by setting a content of the resin component to be less than 50 parts by mass with respect to 100 parts by mass of the rubber component and adding styrene-butadiene rubber having a glass transition temperature lower than -40 °C.
Moreover, in the rubber composition for a tire of the present disclosure, the wet grip performance of a tire having the rubber

composition applied thereto can be further improved by setting a mass ratio of the resin component/the isoprene skeleton rubber to be ≥ 0.5.
Accordingly, it is possible to achieve satisfactory wet grip performance, satisfactory fuel-saving performance, and satisfactorily high wear resistance of a tire in a well-balanced manner by applying to the tire the rubber composition for a tire of the present disclosure.

(Rubber component)

The rubber composition for a tire of the present disclosure contains a rubber component. The rubber component includes an isoprene skeleton rubber and a styrene-butadiene rubber and optionally another/other rubber component/-components.

- Isoprene skeleton rubber -

The isoprene skeleton rubber is a rubber having a skeleton primarily constituted of isoprene units and specific examples thereof include natural rubber (NR), synthetic isoprene rubber (IR), and the like.
Fracture strength of the rubber composition increases when the rubber component includes an isoprene skeleton rubber. As a result, rolling resistance of a tire having the rubber composition applied thereto decreases, whereby fuel-saving performance of the tire improves. Wear resistance of the tire is also enhanced in this case.
A content of the isoprene skeleton rubber is preferably in the range of 1 to 80 parts by mass and more preferably in the range of 1 to 40 parts by mass with respect to 100 parts by mass of the rubber component. Fuel-saving performance and wet grip performance of a tire having the rubber composition applied thereto can be further improved when a content of the isoprene skeleton rubber is in the range of 1 to 80 parts by mass with respect to 100 parts by mass of the rubber component. Fuel-saving performance and wet grip performance of a tire having the rubber composition applied thereto can be even further improved when a content of the isoprene skeleton rubber is in the range of 1 to 40 parts by mass with respect to 100 parts by mass of the rubber component. The content of the isoprene skeleton rubber is even more preferably ≥ 10 parts by mass with respect to 100 parts by mass of the rubber component in terms of further increasing an effect caused by addition of the isoprene skeleton rubber.

- Styrene-butadiene rubber -

The styrene-butadiene rubber (SBR) has a glass transition temperature lower than -40 °C, preferably equal to or lower than -45 °C, more preferably equal to or lower than -50 °C, and preferably higher than -90°C. Fuel-saving performance and wear resistance performance of a tire having the rubber composition applied thereto can be satisfactorily improved when the styrene-butadiene rubber has a glass transition temperature lower than -40 °C. Styrene-butadiene rubber having a glass transition temperature higher than -90 °C can be easily synthesized.
A content of the styrene-butadiene rubber is preferably in the range of 20 to 99 parts by mass, more preferably in the range of 30 to 99 parts by mass, even more preferably in the range of 40 to 99 parts by mass, still even more preferably in the range of 50 to 99 parts by mass, and particularly preferably in the range of 60 to 99 parts by mass with respect to 100 parts by mass of the rubber component. Fuel-saving performance and wet grip performance of a tire having the rubber composition applied thereto can be more satisfactorily improved when a content of the styrene-butadiene rubber is in the range of 60 to 99 parts by mass with respect to 100 parts by mass of the rubber component.
A difference in SP value between the isoprene skeleton rubber and the styrene-butadiene rubber is preferably ≥ 0.3 $(cal/cm^3)^{1/2}$ and more preferably ≥ 0.35 $(cal/cm^3)^{1/2}$. The isoprene skeleton rubber and the styrene-butadiene rubber tend to be incompatible with each other when a difference in SP value between the isoprene skeleton rubber and the styrene-butadiene rubber is ≥ 0.3 $(cal/cm^3)^{1/2}$.
A bound styrene content in the styrene-butadiene rubber is < 15 mass %. A "bound styrene content in the styrene-butadiene rubber" represents a content of styrene units contained in the styrene-butadiene rubber. Glass transition temperature is likely to drop when a bound styrene content in the styrene-butadiene rubber is < 15 mass %. The bound styrene content in the styrene-butadiene rubber is more preferably ≤ 14 mass %, even more preferably ≤ 13 mass %, and particularly preferably ≤ 12 mass %. Further, the bound styrene content in the styrene-butadiene rubber is preferably ≥ 5 mass %, more preferably ≥ 7 mass %, and particularly preferably ≥ 8 mass % in terms of satisfactorily improving wear resistance of a tire having the rubber composition applied thereto. A bound styrene content in the styrene-butadiene rubber can be adjusted by changing amounts of monomers for use in polymerization of the styrene-butadiene rubber, a degree of polymerization, and the like.
The styrene-butadiene rubber is preferably modified by a modifying agent having a nitrogen atom-including functional group and an alkoxy group. In a case where the styrene-butadiene rubber has been modified by a modifying agent having a nitrogen atom-including functional group and an alkoxy group, it is possible to improve wet grip

performance, fuel-saving performance and wear resistance performance (the fuel-saving performance and the wear resistance performance in particular) of a tire having the rubber composition applied thereto in an especially well balanced manner. The term of a "modifying agent having a nitrogen atom-including functional group and an alkoxy group" comprehensively represents any modifying agent having: a functional group including at least one nitrogen atom; and at least one alkoxy group. The nitrogen atom-including functional group is preferably selected from the group consisting of:

i) a normal, branched, alicyclic or aromatic $C_{1-30}$ monovalent hydrocarbon group having a functional group selected from the group consisting of primary amino group, primary amino group protected by a hydrolysable protecting group, a residue of onium salt derived from primary amine, isocyanate group, thioisocyanate group, imine group, imine residue, amido group, secondary amino group protected by a hydrolysable protecting group, cyclic secondary amino group, a residue of onium salt derived from cyclic secondary amine, acyclic secondary amino group, a residue of onium salt derived from acyclic secondary amine, a residue of triester of isocyanuric acid, cyclic tertiary amino group, acyclic tertiary amino group, nitrile group, pyridine residue, a residue of onium salt derived from cyclic tertiary amine, and a residue of onium salt derived from acyclic tertiary amine; and
ii) a normal, branched, alicyclic or aromatic $C_{1-30}$ monovalent hydrocarbon group which may contain at least one hetero atom selected from the group consisting of oxygen atom, sulfur atom and phosphorus atom.

-- Modified styrene-butadiene rubber of first preferable embodiment --

It is preferable that the styrene-butadiene rubber (SBR) is modified with an aminoalkoxysilane compound and it is more preferable in terms of imparting the SBR with high affinity with the fillers that a terminal end of the styrene-butadiene rubber (SBR) is modified with an aminoalkoxysilane compound. An interaction between the modified styrene-butadiene rubber and the fillers (silica in particular) significantly increases in a case where a terminal end of the styrene-butadiene rubber has been modified with an aminoalkoxysilane compound.

The styrene-butadiene rubber may be modified at either a terminal end of the molecule thereof as described above or a site on a main chain thereof. The styrene-butadiene rubber of which terminal end of the molecule has been modified can be manufactured, for example, by causing an active terminal end of a styrene-butadiene copolymer to react with any of various types of modifying agents according to the methods disclosed in WO 2003/046020 and JP 2007-217562 A.

In a preferable embodiment, a styrene-butadiene rubber having a modified terminal end of a molecule can be manufactured by, for example, causing an active terminal end having a cis-1,4 bond content of $\geq$ 75 %, of a styrene-butadiene copolymer, to react with an aminoalkoxysilane compound; and then causing the resulting intermediate product to react with a partial ester of a polyhydric alcohol and a carboxylic acid for stabilization according to the methods disclosed in WO 2003/046020 and JP 2007-217562 A.

The partial ester of a polyhydric alcohol and a carboxylic acid is a partial ester which is an ester of a polyhydric alcohol and a carboxylic acid and has at least one hydroxyl group. Specifically, esters of sugars or modified sugars having 4 or more carbon atoms and fatty acids are preferable. More preferable examples of the ester include (1) partial esters of polyhydric alcohols with fatty acids and, in particular, partial esters of polyhydric alcohols and saturated/unsaturated higher fatty acids having 10 to 20 carbon atoms which may be monoesters, diesters or triesters and (2) ester compounds obtained by bonding 1 to 3 molecules of partial esters of polybasic carboxylic acids and higher alcohols to polyhydric alcohols. Examples of the polyhydric alcohol for use as a raw material of the partial ester include sugars preferably having at least 3 hydroxyl groups and 5 to 6 carbon atoms which may be hydrogenated or not hydrogenated, glycols, and polyhydroxyl compounds. The fatty acid for use as a raw material of the partial ester is preferably saturated/unsaturated fatty acids having 10 to 20 carbon atoms such as stearic acid, lauric acid, and palmitic acid. Among the partial esters of polyhydric alcohols and fatty acids, esters of fatty acids and sorbitan are preferable. Specific examples of the esters of fatty acids and sorbitan include sorbitan monolaurate, sorbitan monopalmitate, sorbitan monostearate, sorbitan tristearate, sorbitan monooleate, sorbitan trioleate, and the like.

Although type of the aminoalkoxysilane compound is not particularly restricted, use of an aminoalkoxysilane compound represented by general formula (i) shown below is preferable in the present disclosure.

$$R^{11}{}_{a}\text{-Si-}(OR^{12})_{4-a} \cdots \qquad (i)$$

In the general formula (i), each of $R^{11}$ and $R^{12}$ independently represents a $C_{1-20}$ monovalent aliphatic hydrocarbon group or a $C_{6-18}$ monovalent aromatic hydrocarbon group, wherein: at least one of $R^{11}$ and $R^{12}$ is substituted with amino group; "a" is an integer in the range of 0 to 2; respective $OR^{12}$s may belong to either the same type or different types when a plurality of $OR^{12}$s exists; and no active proton is included in the molecule.

An aminoalkoxysilane compound represented by general formula (ii) shown below is also preferable as the aminoalkoxysilane compound described above.

[Chemical 1]

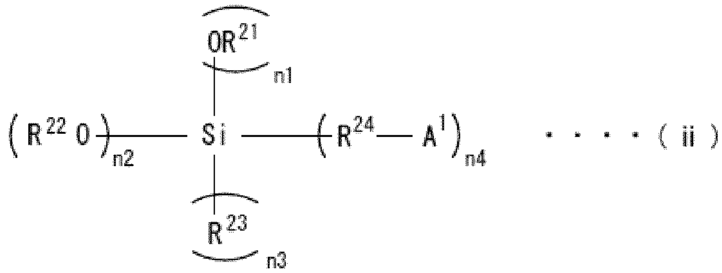

In the general formula (ii), n1 + n2 + n3 + n4 = 4, wherein n2 is an integer in the range of 1 to 4 and each of n1, n3 and n4 is an integer in the range of 0 to 3. $A^1$ represents at least one functional group selected from the group consisting of a residue of saturated cyclic tertiary amine compound, a residue of unsaturated cyclic tertiary amine compound, a ketimine residue, nitrile group, (thio)isocyanate group, isocyanuric acid trihydrocarbyl ester group, (nitrile group,) pyridine group, (thio)ketone group, amido group, and primary/secondary amino group having a hydrolysable group. $A^1$s may be of either the same type or different types when n4 is ≥ 2. $A^1$ may be a divalent group which is bonded to Si to form a cyclic structure.
$R^{21}$ represents a $C_{1-20}$ monovalent aliphatic/alicyclic hydrocarbon group or a $C_{6-18}$ monovalent aromatic hydrocarbon group. $R^{21}$s may be of either the same type or different types when n1 is ≥ 2.
$R^{22}$ represents a $C_{1-20}$ monovalent aliphatic/alicyclic hydrocarbon group or a $C_{6-18}$ monovalent aromatic hydrocarbon group and may include nitrogen atom and/or silicon atom therein. $R^{22}$s may be of either the same type or different types or collectively form a ring when n2 is ≥ 2.
$R^{23}$ represents a $C_{1-20}$ monovalent aliphatic/alicyclic hydrocarbon group, a $C_{6-18}$ monovalent aromatic hydrocarbon group, or halogen atom. $R^{23}$s may be of either the same type or different types when n3 is ≥ 2.
$R^{24}$ represents a $C_{1-20}$ divalent aliphatic/alicyclic hydrocarbon group or a $C_{6-18}$ divalent aromatic hydrocarbon group. $R^{24}$s may be of either the same type or different types when n4 is ≥ 2.
Trimethylsilyl group or tert-butyldimethylsilyl group is preferable and trimethylsilyl group is particularly preferable as the hydrolysable group of the primary/secondary amino group having a hydrolysable group described above.

The aminoalkoxysilane compound represented by the general formula (ii) is preferably an aminoalkoxysilane compound represented by general formula (iii) shown below.

[Chemical 2]

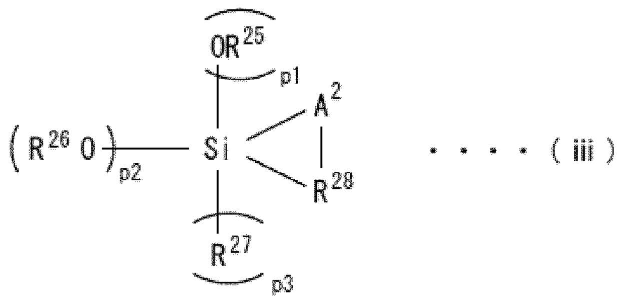

In the general formula (iii), p1 + p2 + p3 = 2, wherein p2 is an integer in the range of 1 to 2 and each of p1, p3 is an integer in the range of 0 to 1.
$A^2$ represents NRa (Ra is a monovalent hydrocarbon group, a hydrolysable group, or a nitrogen-containing organic group).
$R^{25}$ represents a $C_{1-20}$ monovalent aliphatic/alicyclic hydrocarbon group or a $C_{6-18}$ monovalent aromatic hydrocarbon group.
$R^{26}$ represents a $C_{1-20}$ monovalent aliphatic/alicyclic hydrocarbon group or a $C_{6-18}$ monovalent aromatic hydrocarbon group or a nitrogen-containing organic group, wherein each of those groups may include nitrogen atom and/or silicon atom therein. $R^{26}$s may be of either the same type or different types or collectively form a ring when p2 = 2.
$R^{27}$ represents a $C_{1-20}$ monovalent aliphatic/alicyclic hydrocarbon group, a $C_{6-18}$ monovalent aromatic hydrocarbon group, or a halogen atom.
$R^{28}$ represents a $C_{1-20}$ divalent aliphatic/alicyclic hydrocarbon group or a $C_{6-18}$ divalent aromatic hydrocarbon group.
Trimethylsilyl group or tert-butyldimethylsilyl group is preferable and trimethylsilyl group is particularly preferable as the hydrolysable group (when "Ra" described above is a hydrolysable group).

Furthermore, the aminoalkoxysilane compound represented by the general formula (ii) is preferably an aminoalkoxysilane compound represented by general formula (iv) or general formula (v) shown below.

[Chemical 3]

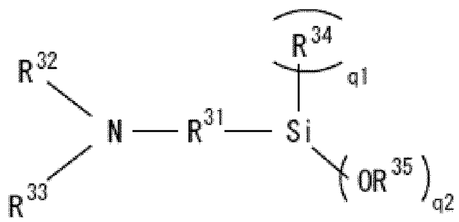

・・・・(iv)

In the general formula (iv), q1 + q2 = 3, wherein q1 is an integer in the range of 0 to 2 and q2 is an integer in the range of 1 to 3.
$R^{31}$ represents a $C_{1-20}$ divalent aliphatic/alicyclic hydrocarbon group or a $C_{6-18}$ divalent aromatic hydrocarbon group.
Each of $R^{32}$ and $R^{33}$ independently represents a hydrolysable group, a $C_{1-20}$ monovalent aliphatic/alicyclic hydrocarbon group or a $C_{6-18}$ monovalent aromatic hydrocarbon group.
$R^{34}$ represents a $C_{1-20}$ monovalent aliphatic/alicyclic hydrocarbon group or a $C_{6-18}$ monovalent aromatic hydrocarbon group. $R^{34}$s may be of either the same type or different types when q1 = 2.
$R^{35}$ represents a $C_{1-20}$ monovalent aliphatic/alicyclic hydrocarbon group or a $C_{6-18}$ monovalent aromatic hydrocarbon group. $R^{35}$s may be of either the same type or different types when q2 is ≥ 2.

[Chemical 4]

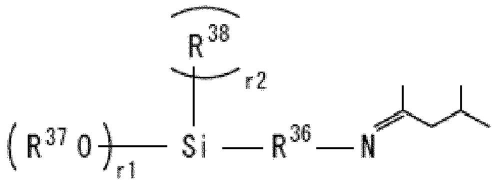

・・・・(v)

In the general formula (v), r1 + r2 = 3, wherein r1 is an integer in the range of 1 to 3 and r2 is an integer in the range of 0 to 2.
$R^{36}$ represents a $C_{1-20}$ divalent aliphatic/alicyclic hydrocarbon group or a $C_{6-18}$ divalent aromatic hydrocarbon group.
$R^{37}$ represents dimethylaminomethyl, dimethylaminoethyl, diethylaminomethyl, diethylaminoethyl, methylsilyl(methyl)aminomethyl, methylsilyl(methyl)aminoethyl, methylsilyl(ethyl)aminomethyl, methylsilyl(ethyl)aminoethyl, dimethylsilylaminomethyl, dimethylsilylaminoethyl group, a $C_{1-20}$ monovalent aliphatic/alicyclic hydrocarbon group, or a $C_{6-18}$ monovalent aromatic hydrocarbon group. $R^{37}$s may be of either the same type or different types when r1 is ≥ 2.
$R^{38}$ represents a $C_{1-20}$ hydrocarbyloxy group, a $C_{1-20}$ monovalent aliphatic/alicyclic hydrocarbon group or a $C_{6-18}$ monovalent aromatic hydrocarbon group. $R^{38}$s may be of either the same type or different types when r2 = 2.
Specific examples of the aminoalkoxysilane compound represented by the general formula (v) include N-(1,3-dimethylbutylidene)-3-triethoxysilyl-1-propaneamine.

Furthermore, the aminoalkoxysilane compound represented by the general formula (ii) is preferably an aminoalkoxysilane compound represented by general formula (vi) or general formula (vii) shown below.

[Chemical 5]

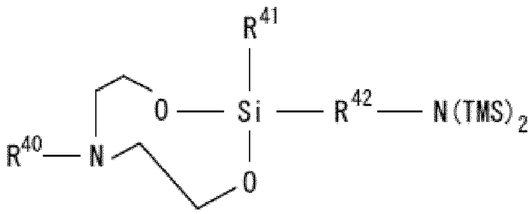

・・・・(vi)

In the general formula (vi), $R^{40}$ represents trimethylsilyl group, a $C_{1-20}$ monovalent aliphatic/alicyclic hydrocarbon group or a $C_{6-18}$ monovalent aromatic hydrocarbon group.
$R^{41}$ represents a $C_{1-20}$ hydrocarbyloxy group, a $C_{1-20}$ monovalent aliphatic/alicyclic hydrocarbon group or a $C_{6-18}$ monovalent aromatic hydrocarbon group.
$R^{42}$ represents a $C_{1-20}$ divalent aliphatic/alicyclic hydrocarbon group or a $C_{6-18}$ divalent aromatic hydrocarbon group.
In the present disclosure, "TMS" represents trimethylsilyl group (the same shall apply hereinafter).

[Chemical 6]

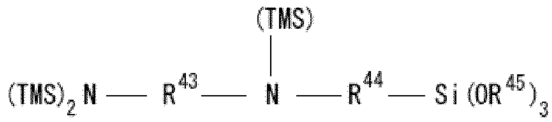

· · · · (vii)

In the general formula (vii), each of $R^{43}$ and $R^{44}$ independently represents a $C_{1-20}$ divalent aliphatic/alicyclic hydrocarbon group or a $C_{6-18}$ divalent aromatic hydrocarbon group.
Each of $R^{45}$s represents a $C_{1-20}$ monovalent aliphatic/alicyclic hydrocarbon group or a $C_{6-18}$ monovalent aromatic hydrocarbon group, wherein $R^{45}$s may be of either the same type or different types.

Furthermore, the aminoalkoxysilane compound represented by the general formula (ii) is preferably an aminoalkoxysilane compound represented by general formula (viii) or general formula (ix) shown below.

[Chemical 7]

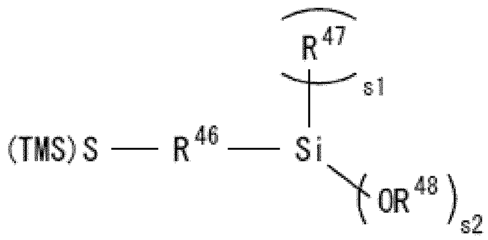

· · · · (viii)

In the general formula (viii), s1 + s2 = 3, wherein s1 is an integer in the range of 0 to 2 and s2 is an integer in the range of 1 to 3.
$R^{46}$ represents a $C_{1-20}$ divalent aliphatic/alicyclic hydrocarbon group or a $C_{6-18}$ divalent aromatic hydrocarbon group.
Each of $R^{47}$ and $R^{48}$ independently represents a $C_{1-20}$ monovalent aliphatic/alicyclic hydrocarbon group or a $C_{6-18}$ monovalent aromatic hydrocarbon group.
$R^{47}$s may be of either the same type or different types when s1 = 2. $R^{48}$s may be of either the same type or different types when $s2 \geq 2$.

[Chemical 8]

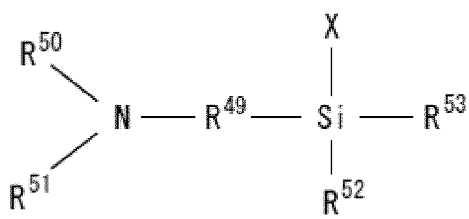

· · · · (ix)

In the general formula (ix), "X" represents a halogen atom.
$R^{49}$ represents a $C_{1-20}$ divalent aliphatic/alicyclic hydrocarbon group or a $C_{6-18}$ divalent aromatic hydrocarbon group.
Each of $R^{50}$ and $R^{51}$ may independently represent a hydrolysable group, a $C_{1-20}$ monovalent aliphatic/alicyclic hydrocarbon group or a $C_{6-18}$ monovalent aromatic hydrocarbon group. Alternatively, $R^{50}$ and $R^{51}$ may be bonded to each other to form a divalent organic group.
Each of $R^{52}$ and $R^{53}$ independently represents halogen atom, hydrocarbyloxy group, a $C_{1-20}$ monovalent aliphatic/alicyclic hydrocarbon group or a $C_{6-18}$ monovalent aromatic hydrocarbon group.
Each of $R^{50}$ and $R^{51}$ is preferably a hydrolysable group, wherein the hydrolysable group is preferably trimethylsilyl group or

tert-butyldimethylsilyl group and particularly preferably trimethylsilyl group.

Furthermore, the aminoalkoxysilane compound represented by the general formula (ii) is preferably an aminoalkoxysilane compound represented by any of general formulae (x), (xi), (xii) and (xiii) shown below.

[Chemical 9]

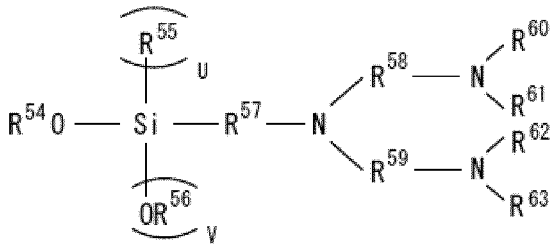

· · · · (x)

[Chemical 10]

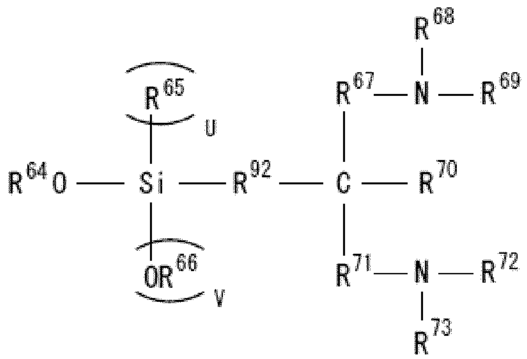

· · · · (xi)

[Chem 11]

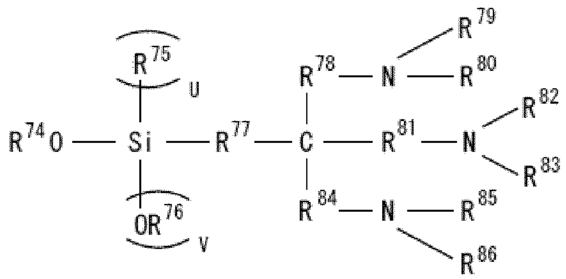

· · · · (xii)

[Chem 12]

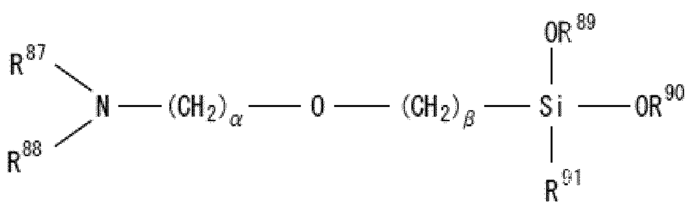

· · · · (xiii)

In the general formulae (x) to (xiii), each of "U" and "V" represents an integer in the range of 0 to 2, wherein U + V = 2.

$R^{14}$ to $R^{92(91)}$ in the general formulae (x) to (xiii), which may be of either the same type or different types, is a $C_{1-20}$ monovalent/divalent aliphatic/alicyclic hydrocarbon group or a $C_{6-18}$ monovalent/divalent aromatic hydrocarbon group.

Each of "α" and "β" in the general formula (xiii) represents an integer in the range of 0 to 5.

Among the compounds satisfying the general formula (x), the general formula (xi) and the general formula (xii), N1,N1,N7,N7-tetramethyl-4-((trimethoxysilyl)methyl)heptane-1,7-diamine, 2-((hexyl-dimethoxysilyl)methyl)-N1,N1,N3,N3-2-pentamethylpropane-1,3-diamine, N1-(3-(dimethylamino)propyl)-N3,N3-dimethyl-N1-(3-(trimethoxysilyl)propyl)propane-1,3-diamine, and 4-(3-(dimethylamino)propyl)-N1,N1,N7,N7-tetramethyl-4-((trimethoxysilyl)methyl)heptane-1,7-diamine are preferable.

Further, among the compounds satisfying the general formula (xiii), N,N-dimethyl-2-(3-(dimethoxymethylsilyl)propoxy)ethanamine, N,N-bis(trimethylsilyl)-2-(3-(trimethoxysilyl)propoxy)ethanamine, N,N-dimethyl-2-(3-(trimethoxysilyl)propoxy)ethanamine, and N,N-dimethyl-3-(3-(trimethoxysilyl)propoxy)propane-1-amine are preferable.

-- Modified styrene-butadiene rubber of second preferable embodiment --

It is preferable that the styrene-butadiene rubber (SBR) is modified with a coupling agent represented by general formula (I) shown below. Fuel-saving performance and wear resistance performance of a tire having the rubber composition applied thereto can be further improved in this case.

[Chemical 13]

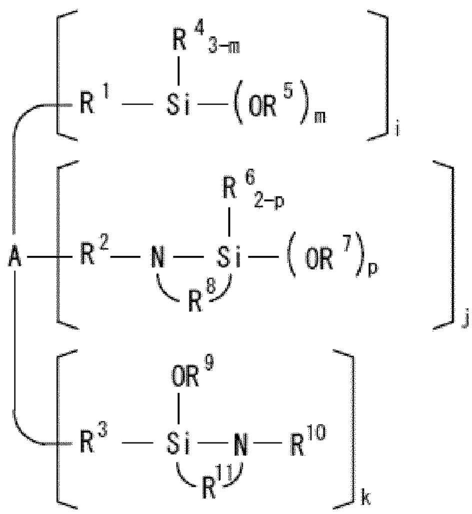

· · · · (I)

In general formula (I), each of $R^1$, $R^2$ and $R^3$ independently represents a single bond or a $C_{1-20}$ alkylene group.
Each of $R^4$, $R^5$, $R^6$, $R^7$ and $R^9$ independently represents a $C_{1-20}$ alkyl group.
Each of $R^8$ and $R^{11}$ independently represents a $C_{1-20}$ alkylene group.
$R^{10}$ represents a $C_{1-20}$ alkyl/trialkylsilyl group.
"m" represents an integer in the range of 1 to 3 and "p" represents 1 or 2.
Each of $R^1$s, $R^2$s, ..., $R^{10}$s, and $R^{11}$s is independent of each other when a plurality of $R^1$s, $R^2$s, ..., $R^{10}$s, and $R^{11}$s exist. Each of $R^4$s, $R^5$s, and $R^7$s is independent of each other when a plurality of $R^4$s and/or a plurality of $R^5$s and/or a plurality of $R^7$s exist in connection with m and p.
Each of "j" and "k" independently represents an integer in the range of 0 to 6, wherein (i +j + k) is an integer in the range of 3 to 10.
"A" represents a $C_{1-20}$ hydrocarbon group or an organic group not having an active hydrogen but having at least one atom selected from the group consisting of oxygen atom, nitrogen atom, silicon atom, sulfur atom, and phosphorus atom.
In the present disclosure, the hydrocarbon group indicated by "A" in the general formula (I) comprehensively represents a saturated hydrocarbon group, an unsaturated hydrocarbon group, an aliphatic hydrocarbon group, and an aromatic hydrocarbon group. Examples of the organic group not having an active hydrogen, indicated by "A" in the general formula (I), include an organic group not possessing a functional group having active hydrogen such as hydroxyl group (-OH), secondary amino group (>NH), primary amino group ($>NH_2$), and sulfhydryl group (-SH).

It is preferable that the styrene-butadiene rubber modified with the coupling agent represented by general formula (I): has the weight average molecular weight (Mw) in the range of $20 \times 10^4$ to $300 \times 10^4$; contains a modified styrene-butadiene rubber having a molecular weight in the range of $200 \times 10^4$ to $500 \times 10^4$ by an amount of 0.25 mass % to 30 mass % with respect to the total amount of the modified styrene-butadiene rubber; and has a shrinking factor (g') of less

than 0.64.

In general, a polymer having a branch tends to exhibit a smaller molecular size than a normal polymer sharing the same absolute molecular weight as the branched polymer. The "shrinking factor (g')" described above is an index of a ratio of the molecular size of the branched polymer with respect to the molecular size of the normal polymer theoretically sharing the same absolute molecular weight as the branched polymer. Specifically, the larger degree of branching of a polymer results in the smaller shrinking factor (g') value thereof. In the present embodiment, an intrinsic viscosity is employed as the index of the molecular size, wherein a normal polymer is assumed to satisfy the following relationship formula: Intrinsic viscosity $[\eta] = -3.883*M^{0.771}$. The shrinking factor (g') of a modified styrene-butadiene rubber is determined by: calculating shrinking factor (g') values corresponding to respective absolute molecular weights of the modified styrene-butadiene rubber; then extracting the shrinking factor (g') values of which absolute molecular weights are in the range of $100 \times 10^4$ to $200 \times 10^4$; calculating the average value of the shrinking factor (g') values thus extracted; and regarding the average value as the shrinking factor (g') of the modified styrene-butadiene rubber. In the present disclosure, a "branch" represents a structure which is formed by direct/indirect bonding of one polymer to another polymer. A "degree of branching" represents the number of polymer(s) directly/indirectly bonded at a branching site. For example, in a case where five styrene-butadiene copolymer chains are indirectly bonded to each other by way of a coupling residue described below, the degree of branching is 5. A "coupling residue" represents a structural unit of a modified styrene-butadiene rubber bonded to a styrene-butadiene copolymer chain and examples thereof include a structural unit derived from a coupling agent, generated by causing a styrene-butadiene copolymer to react with a coupling agent as described below. A "styrene-butadiene copolymer chain" represents a structural unit of a modified styrene-butadiene rubber and examples thereof include a structural unit derived from a styrene-butadiene copolymer, generated by causing a styrene-butadiene copolymer to react with a coupling agent as described below.

The shrinking factor (g') is preferably < 0.64, more preferably ≤ 0.63, even more preferably ≤ 0.60, still even more preferably ≤ 0.59, and particularly preferably ≤ 0.57. The lower limit of the shrinking factor (g'), which is not particularly restricted and may be equal to or lower than the detection limit value, is preferably ≥ 0.30, more preferably ≥ 0.33, even more preferably ≥ 0.35, and still even more preferably ≥ 0.45. Processability of the rubber composition is improved by using a modified styrene-butadiene rubber having the shrinking factor (g') in the above-described ranges.

Since the shrinking factor (g') generally depends on the degree of branching, the shrinking factor (g') can be controlled by, for example, adjusting the degree of branching as a relevant index. Specifically, a modified styrene-butadiene rubber having the degree of branching of 6 generally exhibits the shrinking factor (g') in the range of ≥ 0.59 and ≤ 0.63. A modified styrene-butadiene rubber having the degree of branching of 8 generally exhibits the shrinking factor (g') in the range of ≥ 0.45 and ≤ 0.59.

It is preferable that the styrene-butadiene rubber modified with the coupling agent represented by general formula (I) has branches, wherein a degree of branching thereof is 5 or more. Further, it is more preferable that the modified styrene-butadiene rubber has at least one coupling residue and a styrene-butadiene copolymer chain bonded to the coupling residue, wherein the aforementioned branches include branches formed by 5 or more styrene-butadiene copolymer chains bonded to the one coupling residue. It is possible to reliably control the shrinking factor (g') to be < 0.64 by setting the degree of branching of the modified styrene-butadiene rubber to be ≥ 5 and specifying a structure of the modified styrene-butadiene rubber so that the branches thereof include (≥5) branches formed by 5 or more styrene-butadiene copolymer chains bonded to one coupling residue. The number of styrene-butadiene copolymer chains bonded to one coupling residue can be confirmed from the value of the shrinking factor (g').

In this respect, it is more preferable that the modified styrene-butadiene rubber has branches, wherein a degree of branching thereof is 6 or more. Further, it is even more preferable that the modified styrene-butadiene rubber has at least one coupling residue and a styrene-butadiene copolymer chain bonded to the coupling residue, wherein the aforementioned branches include branches formed by 6 or more styrene-butadiene copolymer chains bonded to the one coupling residue. It is possible to reliably control the shrinking factor (g') to be ≤ 0.63 by setting the degree of branching of the modified styrene-butadiene rubber to be ≥ 6 and specifying a structure of the modified styrene-butadiene rubber so that the branches thereof include (≥6) branches formed by 6 or more styrene-butadiene copolymer chains bonded to one coupling residue.

It is even more preferable that the modified styrene-butadiene rubber has branches, wherein a degree of branching thereof is 7 or more. A degree of branching of 8 or more is still even more preferable in this regard. The upper limit of the degree of branching is not particularly restricted but preferably ≤ 18. Further, it is still even more preferable that the modified styrene-butadiene rubber has at least one coupling residue and a styrene-butadiene copolymer chain bonded to the coupling residue, wherein the aforementioned branches include branches formed by 7 or more styrene-butadiene copolymer chains bonded to the one coupling residue. It is particularly preferable that the aforementioned branches include branches formed by 8 or more styrene-butadiene copolymer chains bonded to the one coupling residue in this regard. It is possible to reliably control the shrinking factor (g') to be ≤ 0.59 by setting the degree of branching of the modified styrene-butadiene rubber to be ≥ 8 and specifying a structure of the modified styrene-butadiene rubber so that the branches thereof include (≥8) branches formed by 8 or more styrene-butadiene copolymer chains bonded to one coupling residue.

It is preferable that at least one terminal end(s) of the styrene-butadiene copolymer chain is bonded to silicon atom(s) of the coupling residue, respectively. Terminal ends of a plurality of the styrene-butadiene copolymer chains may be bonded to one silicon atom in this case. It is also acceptable that a terminal end of a styrene-butadiene copolymer chain and a $C_{1-20}$ alkoxy group or a hydroxy group are bonded to one silicon atom, so that the one silicon atom forms a $C_{1-20}$ alkoxysilyl group or a silanol group.

The modified styrene-butadiene rubber may be an oil-extended rubber having extender oil added thereto. The modified styrene-butadiene rubber, which may be either oil-extended or not, has Mooney viscosity measured at 100 °C preferably in the range of ≥ 20 and ≤ 100 and more preferably in the range of ≥ 30 and ≤ 80 in terms of obtaining satisfactorily high wear resistance.

The weight average molecular weight (Mw) of the modified styrene-butadiene rubber is preferably in the range of $20 \times 10^4 \leq Mw \leq 300 \times 10^4$, more preferably $\geq 50 \times 10^4$, even more preferably $\geq 64 \times 10^4$, and still even more preferably $\geq 80 \times 10^4$. Further, the weight average molecular weight described above is preferably $\leq 250 \times 10^4$, more preferably $\leq 180 \times 10^4$, and even more preferably $\leq 150 \times 10^4$. Low hysteresis loss property, as well as wear resistance performance, of the rubber composition can be satisfactorily improved when the weight average molecular weight of the modified styrene-butadiene rubber is $\geq 20 \times 10^4$. Processability of the rubber composition improves when the weight average molecular weight of the modified styrene-butadiene rubber is $\leq 300 \times 10^4$.

The modified styrene-butadiene rubber preferably contains therein a modified styrene-butadiene rubber having a molecular weight in the range of $\geq 200 \times 10^4$ and $\leq 500 \times 10^4$ (which will be referred to as a "specific high molecular weight component" hereinafter) by ≥ 0.25 mass % and ≤ 30 mass % with respect to the total amount (100 mass %) of the modified styrene-butadiene rubber. Low hysteresis loss property, as well as wear resistance performance, of the rubber composition can be satisfactorily improved when a content of the specific high molecular weight component is in the range of ≥ 0.25 mass % and ≤ 30 mass % with respect to the total amount of the modified styrene-butadiene rubber. The modified styrene-butadiene rubber contains the specific high molecular weight component by preferably ≥ 1.0 mass %, more preferably ≥ 1.4 mass %, even more preferably ≥ 1.75 mass %, still even more preferably ≥ 2.0 mass %, particularly preferably ≥ 2.15 mass %, and most preferably ≥ 2.5 mass %. Further, the modified styrene-butadiene rubber contains the specific high molecular weight component by preferably ≤ 28 mass %, more preferably ≤ 25 mass %, even more preferably ≤ 20 mass %, and still even more preferably ≤ 18 mass %.

In the present disclosure, a "molecular weight" of a rubber component represents a molecular weight thereof in terms of the standard polystyrene, determined by GPC (gel permeation chromatography). In order to obtain a modified styrene-butadiene rubber having a content of the specific high molecular weight component therein in the range described above, the reaction conditions during a relevant polymerization process and a relevant reaction process described below, of the product, are preferably controlled. For example, an amount to be used, of an organic monolithium compound as a polymerization initiator described below, can be adjusted in the polymerization process. Controlling distribution of time during which the reactants stay in the reactors, i.e., distribution of time during which the chain growth reaction occurs, in the polymerization process is also preferable in either continuous-type or batch-type polymerization.

In the modified styrene-butadiene rubber, a molecular weight distribution (Mw/Mn) expressed as a ratio of the weight average molecular weight (Mw) with respect to the number average molecular weight (Mn) thereof is preferably in the range of ≥ 1.6 and ≤ 3.0. Processability of the rubber composition is satisfactory when the molecular weight distribution of the modified styrene-butadiene rubber is within the range described above.

A method for manufacturing the modified styrene-butadiene rubber, which is not particularly restricted, preferably includes: a polymerization process of copolymerizing butadiene and styrene by using an organic monolithium compound as a polymerization initiator, to obtain a styrene-butadiene copolymer; and a reaction process of causing a reactive compound having five or more functional groups (which compound will be referred to as a "coupling agent" hereinafter) to react with an active terminal end of the styrene-butadiene copolymer.

The polymerization process preferably carries out chain growth polymerization induced by a living anion polymerization reaction. A styrene-butadiene copolymer having an active terminal end can be obtained and thus a modified styrene-butadiene rubber having a high modification rate can eventually be obtained in this case. The styrene-butadiene copolymer described above is obtained by copolymerization of 1,3-butadiene and styrene.

An amount to be used, of an organic monolithium compound as a polymerization initiator mentioned above, is preferably decided in accordance with the target molecular weight of the styrene-butadiene copolymer/the modified styrene-butadiene rubber. A ratio of an amount to be used, of monomers such as 1,3-butadiene, styrene and the like, with respect to an amount to be used of the polymerization initiator relates to the resulting degree of polymerization, i.e., the number average molecular weight and/or the weight average molecular weight. Specifically, controllably reducing the amount of the polymerization initiator increases the molecular weight of the styrene-butadiene copolymer/the modified styrene-butadiene rubber, while controllably increasing the amount of the polymerization initiator decreases the molecular weight. The organic monolithium compound is preferably an alkyllithium compound in terms of industrial availability and easiness in controlling a polymerization reaction. A styrene-butadiene copolymer having an alkyl group at the terminal end as the polymerization initiation point can be obtained in this case. Examples of the alkyllithium compound include n-butyllithium, sec-butyllithium, tert-butyllithium, n-hexyllithium, benzyllithium, phenyllithium, and stilbenelithium. The alkyllithium compound is preferably n-butyllithium or sec-butyllithium in terms of industrial availability and easiness in controlling a polymerization reaction. Either a single type or combination of two or more types of the aforementioned examples may be used as the organic monolithium compound.

Examples of polymerization reaction type in the polymerization process include batch-type polymerization reaction and continuous-type polymerization reaction. Either one or two or more connected reactor(s) can be used in the continuous-type polymerization. Examples of the reactor for use in the continuous-type polymerization include a tank-type reactor equipped with a stirrer and a tube-type reactor equipped with a stirrer. In the continuous-type polymerization, it is preferable that monomers, inactive solvent, and a polymerization initiator are continuously fed to reactors, so that a polymer solution containing a polymer is obtained in the reactors and the polymer solution is continuously discharged therefrom. Examples of the reactor for use in the batch-type polymerization include a tank-type reactor equipped with a stirrer. In the batch-type polymerization, it is preferable that monomers, inactive solvent, and a polymerization initiator are fed to a reactor and the monomers are continuously or continually added thereto during the polymerization according to necessity, so that a polymer solution containing a polymer is obtained in the reactor and the polymer solution is discharged after completion of the polymerization. In the present embodiment, the continuous-type polymerization which allows the polymer to be continuously discharged so that the polymer can be quickly provided for the next reaction is preferable in order to obtain a styrene-butadiene copolymer having an active terminal end at a high concentration.

Polymerization is preferably carried out in an inactive solvent in the polymerization process. Examples of the solvent include hydrocarbon solvents such as a saturated hydrocarbon solvent, an aromatic hydrocarbon solvent, and the like. Specific examples of the hydrocarbon solvents include: aliphatic hydrocarbon such as butane, pentane, hexane, heptane; alicyclic hydrocarbon such as cyclopentane, cyclohexane, methylcyclopentane, methylcyclohexane; aromatic hydrocarbon such as benzene, toluene, xylene; and hydrocarbons as mixtures thereof, without being limited thereto. Pretreating allenes and acetylenes as impurities with an organic metal compound prior to the polymerization reaction is preferable because the pretreatment generally ensures obtaining a styrene-butadiene copolymer having an active terminal end at a high concentration and thus eventually obtaining a modified styrene-butadiene rubber attaining a high modification rate.

A polar compound may be added in the polymerization process. Addition of a polar compound allows styrene to be randomly copolymerized with 1,3-butadiene. Further, a polar compound is generally applicable as a vinylating agent for controlling a microstructure of the 1,3-butadiene portion of the resulting copolymer.
Examples of the polar compound which can be used include: ethers such as tetrahydrofuran, diethyl ether, dioxane, ethylene glycol dimethyl ether, ethylene glycol dibutyl ether, diethylene glycol dimethyl ether, diethylene glycol dibutyl ether, dimethoxybenzene, 2,2-bis(2-oxolanyl)propane; tertiary amine compounds such as tetramethylethylenediamine, dipiperidinoethane, trimethylamine, triethylamine, pyridine, quinuclidine; alkali metal alkoxide compounds such as potassium-tert-amylate, potassium-tert-butylate, sodium-tert-butylate, sodium amylate; phosphine compounds such as triphenylphosiphine; and the like. Either a single type or combination of two or more types of those examples may be used as the polar compound.

In the polymerization process, the polymerization temperature is preferably equal to or higher than 0 °C, more preferably equal to or lower than 120°C, and particularly preferably equal to or higher than 50 °C and equal to or lower than 100°C in terms of productivity. It is generally possible to reliably cause a satisfactorily large amount of the coupling agent to react with the active terminal ends at the stage of completion of the polymerization by setting the polymerization temperature to be within the ranges described above.

A bound butadiene content in the styrene-butadiene copolymer or the modified styrene-butadiene rubber, which is not particularly restricted, is preferably in the range of ≥ 40 mass % and ≤ 100 mass % and more preferably in the range of ≥ 55 mass % and ≤ 80 mass %.
A bound styrene content in the styrene-butadiene copolymer or the modified styrene-butadiene rubber, which is not particularly restricted, is preferably in the range of > 0 mass % and ≤ 60 mass % and more preferably in the range of ≥ 20 mass % and ≤ 45 mass %.
Low hysteresis loss property, as well as wear resistance performance, of the rubber composition can be further improved by setting the bound butadiene content and the bound styrene content to be within the ranges described above, respectively.
A bound styrene content can be measured by UV absorbance of the phenyl group and a bound butadiene content can also be determined therefrom.

A vinyl bond content in the butadiene bond unit in the styrene-butadiene copolymer or the modified styrene-butadiene rubber, which is not particularly restricted, is preferably in the range of ≥ 10 mol % and ≤ 75 mol % and more preferably in the range of ≥ 20 mol % and ≤ 65 mol %. Low hysteresis loss property, as well as wear resistance performance, of the rubber composition can be further improved by setting the vinyl bond content to be within the ranges described above.
A vinyl bond content (1,2-bond content) in the butadiene bond unit in the modified styrene-butadiene rubber can be

determined by the method proposed by Robert R. Hampton [R. R. Hampton, Analytical Chemistry, 21, 923 (1949)].

The alkoxysilyl group possessed by the coupling agent represented by the general formula (I) tends to react, for example, with an active terminal end of the styrene-butadiene copolymer, so that the alkoxy lithium is dissociated and silicon of the coupling agent residue is bound to the terminal end of the styrene-butadiene copolymer. Accordingly, the number obtained by subtracting the number of SiORs lost by the aforementioned reaction from the total number of SiORs possessed by one molecule of the coupling agent represents the number of alkoxysilyl groups possessed by the coupling agent residue. On the other hand, an azasilacycle group possessed by the coupling agent forms a >N-Li bond and a bond between silicon of the coupling agent residue and the terminal end of the styrene-butadiene copolymer. The >N-Li bond tends to easily react with water or the like in a finishing process, thereby resulting in >N-H and LiOH. Further, the alkoxysilyl group which remain unreacted, of the coupling agent, tends to easily react with water or the like in a finishing process, thereby resulting in a silanol (Si-OH) group.

The reaction temperature during the reaction process described above is preferably in the same range as the polymerization temperature of the styrene-butadiene copolymer, more preferably equal to or higher than 0 °C and equal to or lower than 120 °C, and even more preferably equal to or higher than 50 °C and equal to or lower than 100 °C. A change in temperature between completion of the polymerization process and addition of the coupling agent is preferably equal to or lower than 10 °C and more preferably equal to or lower than 5 °C.

Reaction time in the reaction process is preferably ≥ 10 seconds and more preferably ≥ 30 seconds. The shorter time period between completion of the polymerization process and the start of the reaction process is the better. The time period is particularly preferably within 5 minutes in terms of obtaining a high coupling reaction yield. Mixing in the reaction process may be any of mechanical stirring, stirring by a static mixer, and the like. A continuous-type polymerization process is preferably accompanied by a continuous-type reaction process. Examples of the reactor for use in the reaction process include a tank-type reactor equipped with a stirrer and a tube-type reactor equipped with a stirrer. The coupling agent may be diluted with an inactive solvent and then continuously fed to the reactor. In a case where a batch-type polymerization process is carried out, either directly charging the coupling agent to the polymerization reactor or transferring the resulting polymer from the polymerization reactor to another reactor to carry out the reaction process is acceptable.

In the general formula (I), "A" is preferably represented by one of general formulae (II) to (V) shown below. A modified styrene-butadiene rubber exhibiting better performances than otherwise can be obtained when "A" is represented by one of the general formulae (II) to (V).

[Chemical 14]

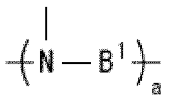 · · · · (II)

In the general formula (II), $B^1$ represents a single bond or a $C_{1-20}$ hydrocarbon group; "a" represents an integer in the range of 1 to 10; and $B^1$s are independent of each other when a plurality of $B^1$s exist.

[Chemical 15]

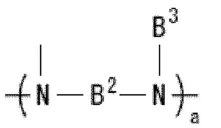 · · · · (III)

In the general formula (III), $B^2$ represents a single bond or a $C_{1-20}$ hydrocarbon group; $B^3$ represents a $C_{1-20}$ alkyl group; "a" represents an integer in the range of 1 to 10; $B^2$s are independent of each other when a plurality of $B^2$s exist; and $B^3$s are independent of each other when a plurality of $B^3$s exist.

[Chemical 16]

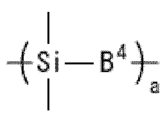 · · · · (IV)

In the general formula (IV), $B^4$ represents a single bond or a $C_{1-20}$ hydrocarbon group; "a" represents an integer in the range of 1 to 10; and $B^4$s are independent of each other when a plurality of $B^4$s exist.

[Chemical 17]

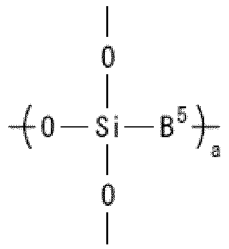

・・・・ (V)

In the general formula (V), $B^5$ represents a single bond or a $C_{1-20}$ hydrocarbon group; "a" represents an integer in the range of 1 to 10; and $B^5$s are independent of each other when a plurality of $B^5$s exist.

In respect of $B^1$, $B^2$, $B^4$, $B^5$ of the general formulae (II) to (V), examples of the $C_{1-20}$ hydrocarbon group include a $C_{1-20}$ alkylene group, and the like.

It is preferable that "A" in the general formula (I) is represented by the general formula (II) or general formula (III) and "k" is 0.

It is more preferable that "A" in the general formula (I) is represented by the general formula (II) or general formula (III), "k" is 0, and "a" in an integer in the range of 2 to 10 in the general formula (II)/the general formula (III).

It is even more preferable that "A" in the general formula (I) is represented by the general formula (II), "k" is 0, and "a" in an integer in the range of 2 to 10 in the general formula (II).

Examples of the coupling agent include bis(3-trimethoxysilylpropyl)-[3-(2,2-dimethoxy-1-aza-2-silacyclopentane)propyl] amine, tris(3-trimethoxysilylpropyl)amine, tris(3-triethoxysilylpropyl) amine, tris(3-trimethoxysilylpropyl)-[3-(2,2-dimethoxy-1-aza-2-silacyclopentane)propyl]-1,3-propanediamine, tetrakis[3-(2,2-dimethoxy-1-aza-2-silacyclopentane) propyl]-1,3-propanediamine, tetrakis(3-trimethoxysilylpropyl)-1,3-propanediamine, tetrakis(3-trimethoxysilylpropyl)-1,3-bisaminomethylcyclohexane, tris(3-trimethoxysilylpropyl)-methyl-1,3-propanediamine, bis[3-(2,2-dimethoxy-1-aza-2-silacyclopentane)propyl]-(3-trimethoxysilylpropyl)-methyl-1,3-propanediamine, and the like. Tetrakis(3-trimethoxysilylpropyl)-1,3-propanediamine and tetrakis(3-trimethoxysilylpropyl)-1,3-bisaminomethylcyclohexane are particularly preferable among those examples.

An amount to be added, of a compound as the coupling agent represented by the general formula (I), may be adjusted such that (the number of moles of the styrene-butadiene copolymer)/(the number of moles of the coupling agent) coincides with a desired stoichiometric ratio for reaction and thus a desired degree of branching is likely to be attained in the resulting copolymer. Specifically, the number of moles of the polymerization initiator is preferably ≥ 5.0 times and more preferably ≥ 6.0 times as much in mole as the number of moles of the coupling agent. In this case, the number of the functional groups, i.e., $((m-1) \times i + p \times j + k)$, of the coupling agent represented by the general formula (I) is preferably an integer in the range of 5 to 10 and more preferably an integer in the range of 6 to 10.

The molecular weight distribution (Mw/Mn) of the styrene-butadiene copolymer is set to be preferably in the range of $1.5 \le (Mw/Mn) \le 2.5$ and more preferably in the range of $1.8 \le (Mw/Mn) \le 2.2$ in terms of reliably obtaining a modified styrene-butadiene copolymer containing "the specific high molecular weight component" described above. Further, it is preferable that a single peak is detected in the GPC-determined molecular weight curve of the modified styrene-butadiene rubber thus obtained.

Provided that the peak molecular weight of the modified styrene-butadiene rubber determined by GPC is $Mp_1$ and the peak molecular weight of the styrene-butadiene copolymer is $Mp_2$, it is preferable that $Mp_1$ and $Mp_2$ satisfy following formula.

$$(Mp_1/Mp_2) < 1.8 \times 10 - 12 \times (Mp_2 - 120 \times 10^4)^2 + 2$$

It is more preferable that $20 \times 10^4 \le Mp_2 \le 80 \times 10^4$ and $30 \times 10^4 \le Mp_1 \le 150 \times 10^4$. Each of $Mp_1$ and $Mp_2$ is determined by the method mentioned in Examples described below.

A modification rate of the modified styrene-butadiene rubber is preferably ≥ 30 mass %, more preferably ≥ 50 mass %, and even more preferably ≥ 70 mass %. Low hysteresis loss property, as well as wear resistance performance, of the rubber composition can be further improved by setting the modification rate to be ≥ 30 mass %.

A deactivating agent, a neutralizing agent, and the like may optionally be added to the copolymerizing solution when the reaction process is completed. Examples of the deactivating agent include water, alcohol such as methanol, ethanol, isopropanol, and the like, without being limited thereto. Examples of the neutralizing agent include: carboxylic acid

such as stearic acid, oleic acid, versatic acid (mixture of significantly branched carboxylic acids each having 9-11 carbon atoms (mainly 10)); an aqueous solution of inorganic acid; carbon dioxide gas; and the like.
An antioxidant such as 2,6-di-tert-butyl-4-hydroxytoluene (BHT), n-octadecyl-3-(4'-hydroxy-3',5'-di-tert-butylphenol)propionate, 2-methyl-4,6-bis[(octylthio)methyl]phenol is preferably added to the modified styrene-butadiene rubber in terms of preventing gel generation after the polymerization and improving stability in processing the rubber.

The conventionally known method can be employed as a method for collecting the modified styrene-butadiene rubber from the polymer solution. Examples of the method include: a method of removing the solvent by steam stripping or the like from the polymer solution, filtering a polymer therefrom, and dehydrating and drying the polymer thus filtered, to collect the target polymer; a method of concentrating the polymer solution by a flash tank and removing a volatile component by a vent-type extruder, to collect the target polymer; and a method of directly removing a volatile component by using a drum dryer or the like, to collect the target polymer.

The modified styrene-butadiene rubber obtained by causing the styrene-butadiene copolymer to react with the coupling agent of the general formula (I) is represented, for example, by general formula (VI) shown below.

[Chem 18]

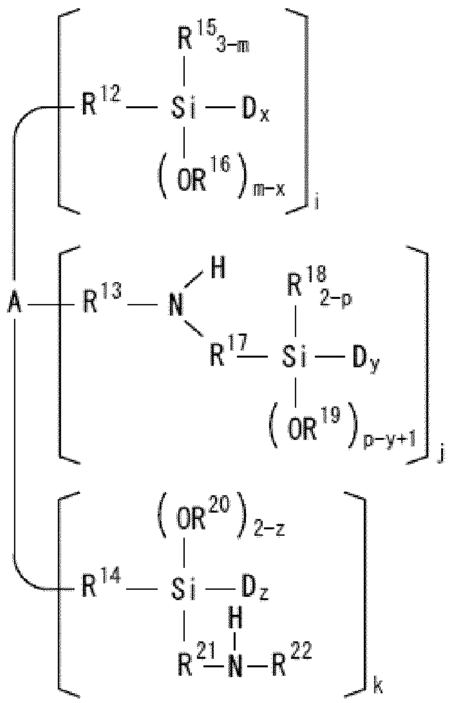

· · · · (VI)

"D" in the general formula (VI) represents a styrene-butadiene copolymer chain. The weight average molecular weight of the styrene-butadiene copolymer chain is preferably in the range of $10 \times 10^4$ to $100 \times 10^4$. The styrene-butadiene copolymer chain is a structural unit of the modified styrene-butadiene rubber, which structural unit is, for example, a structural unit derived from a styrene-butadiene copolymer generated by causing a styrene-butadiene copolymer to react with a coupling agent.
Each of $R^{12}$, $R^{13}$ and $R^{14}$ independently represents a single bond or a $C_{1-20}$ alkylene group.
Each of $R^{15}$ and $R^{18}$ independently represents a $C_{1-20}$ alkyl group.
Each of $R^{16}$, $R^{19}$ and $R^{20}$ independently represents hydrogen atom or a $C_{1-20}$ alkyl group. Each of $R^{17}$ and $R^{21}$ independently represents a $C_{1-20}$ alkylene group.
$R^{22}$ represents hydrogen atom or a $C_{1-20}$ alkyl group.
Each of "m" and "x" represents an integer in the range of 1 to 3, wherein $x \leq m$. "p" represents 1 or 2 and "y" represents an integer in the range of 1 to 3, wherein $y \leq (p + 1)$. "z" represents an integer as 1 or 2.
When a plurality of Ds, $R^{12}$s to $R^{22}$s, m values, p values, x values, y values, and z values exist, each of them is independent of each other, whereby Ds, $R^{12}$s to $R^{22}$s, m values, p values, x values, y values, and z values may be either the same or different from each other.
Each of "i", "j" and "k" independently represents an integer in the range of 0 to 6, wherein (i + j + k) is an integer in the range of 3 to 10 and $((x \times i) + (y \times j) + (z \times k))$ is an integer in the range of 5 to 30.
"A" represents a $C_{1-20}$ hydrocarbon group or an organic group not having an active hydrogen but having at least one atom

selected from the group consisting of oxygen atom, nitrogen atom, silicon atom, sulfur atom, and phosphorus atom. The hydrocarbon group indicated by "A" in the general formula (VI) comprehensively represents a saturated hydrocarbon group, an unsaturated hydrocarbon group, an aliphatic hydrocarbon group, and an aromatic hydrocarbon group. Examples of the organic group not having an active hydrogen, indicated by "A" in the general formula (VI), include an organic group not possessing a functional group having active hydrogen such as hydroxyl group (-OH), secondary amino group (>NH), primary amino group (>$NH_2$), and sulfhydryl group (-SH).

In the general formula (VI), "A" is represented preferably by one of the general formula (II) to (V). Low hysteresis loss property, as well as wear resistance performance, of the rubber composition can be further improved when "A" is represented by any of the general formula (II) to (V).

-- Modified styrene-butadiene rubber of third preferable embodiment --

It is preferable that at least one of the terminal ends of the styrene-butadiene rubber (SBR) has been modified by a modifying agent containing a compound (alkoxysilane) represented by general formula (1) shown below.

[Chemical 19]

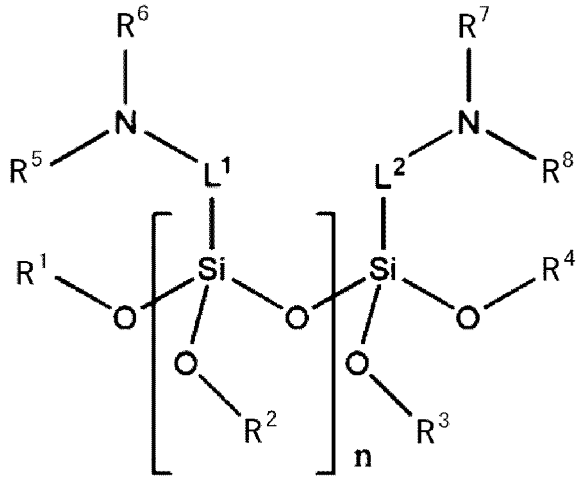

· · · · (1)

It is possible to improve dispersibility of a filler such as silica by using, as the rubber component, a styrene-butadiene rubber modified by a modifying agent containing a compound i) represented by the general formula (1) and ii) having oligosiloxane and tertiary amino group as groups exhibiting affinity to the filler. The rubber composition of the present disclosure, in which dispersibility of the filler is improved accordingly, can significantly improve the low hysteresis loss property thereof, so that a tire having the rubber composition applied thereto can significantly reduce rolling resistance and improve fuel-saving performance thereof.

In the general formula (1), each of $R^1$ to $R^8$ independently represents a $C_{1-20}$ alkyl group; each of $L^1$ and $L^2$ independently represents a $C_{1-20}$ alkylene group; and "n" represents an integer in the range of 2 to 4.

Specifically, each of $R^1$ to $R^4$ independently may represent a substituted or unsubstituted $C_{1-20}$ alkyl group in the general formula (1). In a case where any of $R^1$ to $R^4$ is substituted, each of them may independently be substituted with one or more substituent groups selected from the group consisting of a $C_{1-10}$ alkyl group, a $C_{3-10}$ cycloalkyl group, a $C_{1-10}$ alkoxy group, a $C_{4-10}$ cycloalkoxy group, a $C_{6-12}$ aryl group, a $C_{6-12}$ aryloxy group, a $C_{2-12}$ alkanoyloxy group (Ra-COO-, wherein Ra represents a $C_{1-9}$ alkyl group), a $C_{7-13}$ aralkyloxy group, a $C_{7-13}$ arylalkyl group, and a $C_{7-13}$ alkylaryl group. More specifically, each of $R^1$ to $R^4$ may independently represent a substituted or unsubstituted $C_{1-10}$ alkyl group. Even more specifically, each of $R^1$ to $R^4$ may independently represent a substituted or unsubstituted $C_{1-6}$ alkyl group.

Further, each of $R^5$ to $R^8$ independently represents a substituted or unsubstituted $C_{1-20}$ alkyl group in the general formula (1). Specifically, each of $R^5$ to $R^8$ may independently represent a substituted or unsubstituted $C_{1-10}$ alkyl group. More specifically, each of $R^5$ to $R^8$ may independently represent a substituted or unsubstituted $C_{1-6}$ alkyl group. In a case where any of $R^5$ to $R^8$ is substituted, each of them may be substituted with one or more substituent groups as described above in connection with $R^1$ to $R^4$.

It should be noted that, if $R^5$ to $R^8$ were not alkyl groups but hydrolysable substituent groups, the chemical bonds of N-$R^5R^6$ and N-$R^7R^8$ would be hydrolyzed to N-H under the presence of moisture, which could adversely affect processability of the polymer.

More specifically, each of $R^1$ to $R^4$ may represent methyl or ethyl group and each of $R^5$ to $R^8$ may represent a $C_{1-10}$ alkyl group in the compound represented by the general formula (1).

The amino groups or N-$R^5R^6$ and N-$R^7R^8$ in the compound represented by the general formula (1) are preferably tertiary amino groups. Those tertiary amino groups allow the compound represented by the general formula (1) and the resulting polymer to exhibit better processability than otherwise when the compound is used as a modifying agent.
It should be noted that presence of an amino-protecting group or hydrogen bonded at any of $R^5$ to $R^8$ may disturb satisfactory manifestation of the effect caused by the compound represented by the general formula (1). In a case where hydrogen is bonded at any of $R^5$ to $R^8$, an anion reacts with the hydrogen and loses reactivity thereof in the modification process, thereby making it impossible for the modification reaction itself to proceed. In a case where an amino-protecting group is bonded at any of $R^5$ to $R^8$, although the modification reaction somehow proceeds, the amino groups or N-$R^5R^6$ and N-$R^7R^8$ become primary/secondary amino groups when the amino-protecting group is released by hydrolysis in the subsequent process in a state where the compound (1) is bonded to the terminal end of the polymer, thereby increasing viscosity of the mixture in the mixing process later and possibly deteriorating processability.

Each of $L^1$ and $L^2$ independently represents a substituted or unsubstituted $C_{1-20}$ alkylene group in the compound represented by the general formula (1).
More specifically, each of $L^1$ and $L^2$ may independently represent a $C_{1-10}$ alkylene group. Even more specifically, each of $L^1$ and $L^2$ may independently represent a $C_{1-6}$ alkylene group such as methylene, ethylene, or propylene group.

Regarding $L^1$ and $L^2$ of the compound represented by the general formula (1), the closer the N atom is to the Si atom in the molecule, the better effect can be obtained. However, if Si were directly bonded to N, the bonding between Si and N might be broken and the secondary amino group generated as a result of the breakage would probably flow away with water and be lost during the subsequent processes. In this case, the resulting modified SBR would naturally have difficulty in bond formation with a filler (the lost amino group was supposed to facilitate bond formation with a filler such as silica), whereby the effect of improving dispersibility of the filler would possibly be deteriorated. Accordingly, in view of an impact of the bond length between Si and N on the intended effect, each of $L^1$ and $L^2$ independently represents more preferably a $C_{1-3}$ alkylene group such as methylene, ethylene, or propylene group and more specifically propylene group. Each of $L^1$ and $L^2$ may be substituted with such a substituent group as described above in connection with $R^1$ to $R^4$.

The compound represented by the general formula (1) is preferably any one of the compounds represented by structural formulae (1-1)-(1-5) shown below because then better low hysteresis loss property can be realized than otherwise.

[Chemical 20]

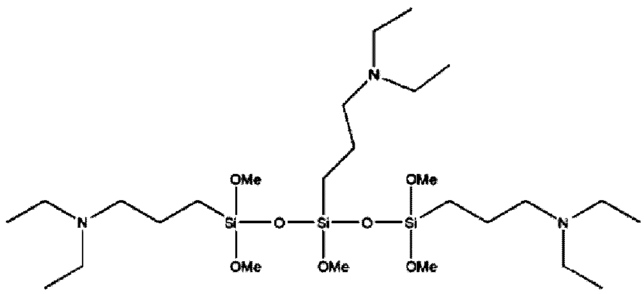

・・・・(1-1)

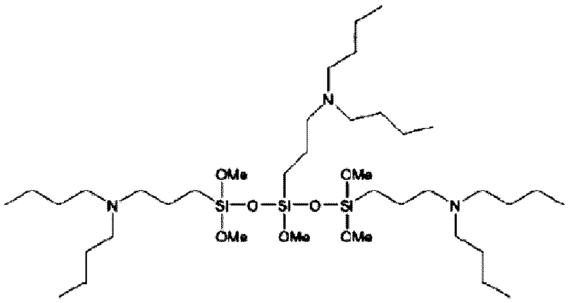

・・・・(1-2)

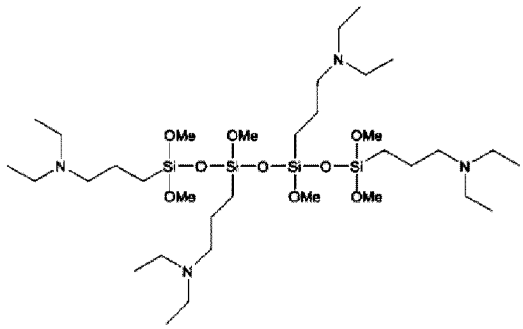

・・・・(1-3)

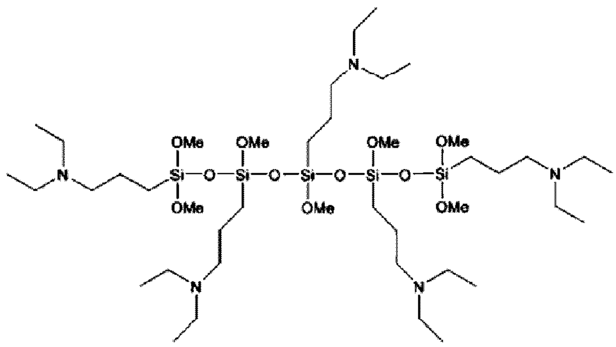

・・・・(1-4)

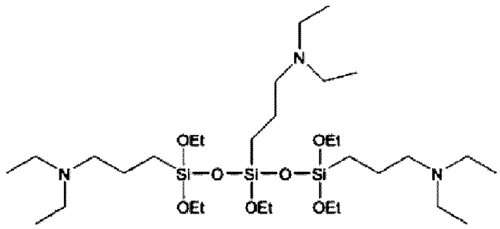

・・・・(1-5)

In the compound represented by the general formula (1), the alkoxysilane structure thereof is bonded to an active terminal end of styrene-butadiene copolymer, while three or more amino groups bonded to the Si-O-Si structure and the terminal ends exhibit affinity to a filler such as silica, so that the compound can facilitate bonding between the filler and the modified SBR better than the conventional modifying agent including a single amino group in a molecule thereof. Further,

the compound represented by the general formula (1) is uniformly bonded to the active terminal end of the SBR, whereby the molecular weight distribution of the polymer does not widen but is steady after the coupling, as compared with before the coupling, when changes in the molecular weight distribution is observed before and after the coupling. That is, the compound represented by the general formula (1) does not deteriorate physical properties of the modified SBR itself but rather prevents aggregation of a filler from occurring in the rubber composition and improves dispersibility of the filler, thereby successfully improving processability of the rubber composition. Due to those superior effects, fuel saving performance and wet grip performance can be improved in a well balanced manner when the rubber composition is applied to a tire, in particular.

The compound represented by the general formula (1) can be manufactured by a condensation reaction represented by a reaction scheme shown below.

[Chemical 21]

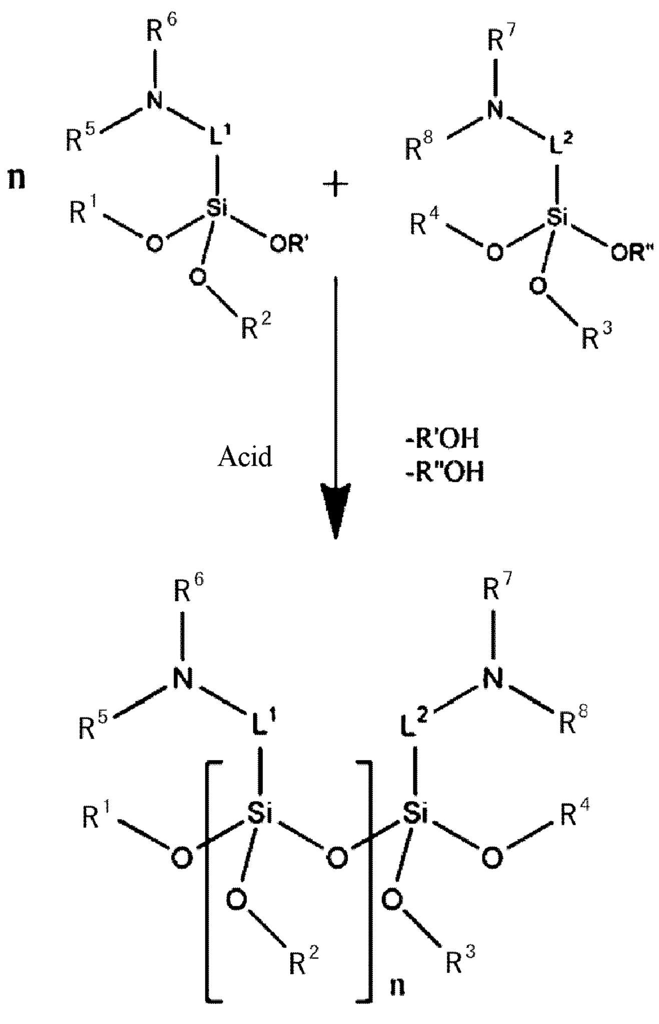


In the reaction scheme shown above, $R^1$ to $R^8$, $L^1$ and $L^2$, as well as "n", are defined in the same manner as defined the general formula (1). R' and R" are any optional substituent groups which do not affect the condensation reaction described above. For example, each of R' and R" may independently represent the same substituent group as any one of $R^1$ to $R^4$.

The reaction shown in the reaction scheme proceeds under the presence of an acid, wherein type of the acid is not restricted as long as the acid is one generally used for condensation reactions. One skilled in the art may select the most appropriate acid in accordance with various process variables including the type of a reactor for use in the reaction, the starting materials, the reaction temperature, and the like.

It is possible to obtain a modified styrene-butadiene rubber having a molecular weight distribution (Mw/Mn, which may be referred to as "polydispersity index (PDI)") in the range of 1.1 to 3.0, which distribution is relatively narrow, by carrying out modification of SBR by using a modifying agent containing the compound represented by the general formula

(1). In a case where the molecular weight distribution of the modified styrene-butadiene rubber exceeds 3.0 or is less than 1, tensile properties and viscoelasticity of the rubber composition may deteriorate when the modified SBR is applied to the rubber composition. The molecular weight distribution of the modified styrene-butadiene rubber is preferably in the range of 1.3 to 2.0 in terms of explicitly manifesting an effect of improving tensile properties and viscoelasticity of the rubber composition by controlling the molecular weight distribution of the modified SBR. It should be noted that the molecular weight distribution of the modified styrene-butadiene rubber can be kept similar to the molecular weight distribution of the styrene-butadiene rubber prior to modification, by using the modifying agent described above.

The molecular weight distribution of the modified styrene-butadiene rubber can be calculated from a ratio (Mw/Mn) of the weight average molecular weight (Mw) with respect to the number average molecular weight (Mn). The number average molecular weight (Mn) represents the overall average of respective polymer molecular weights, calculated by measuring the molecular weights of respective "n" polymer molecules, summing up the molecular weights, and dividing the sum by "n". The weight average molecular weight (Mw) represents a molecular weight distribution of the high molecular weight compositions. The average of the overall molecular weights may be expressed by a unit of gram per mole (g/mol).

Each of the weight average molecular weight and the number average molecular weight represents a molecular weight in terms of polystyrene determined by the analysis using gel permeation chromatography (GPC).

The modified styrene-butadiene rubber, satisfying the requirement related to the molecular weight distribution described above, simultaneously has the number average molecular weight (Mn) in the range of 50,000 g/mol to 2,000,000 g/mol and may more specifically have the number average molecular weight in the range of 200,000 g/mol to 800,000 g/mol. The modified styrene-butadiene rubber has the weight average molecular weight (Mw) in the range of 100,000 g/mol to 4,000,000 g/mol and may more specifically have the weight average molecular weight in the range of 300,000 g/mol to 1,500,000 g/mol.

In a case where the weight average molecular weight (Mw) of the modified styrene-butadiene rubber is less than 100,000 g/mol or the number average molecular weight (Mn) thereof is less than 50,000 g/mol, tensile properties of the rubber composition may deteriorate when the modified styrene-butadiene rubber is applied to the rubber composition. In a case where the weight average molecular weight (Mw) of the modified styrene-butadiene rubber exceeds 4,000,000 g/mol or the number average molecular weight (Mn) thereof exceeds 2,000,000 g/mol, workability of the rubber composition may deteriorate due to deterioration of processability of the modified styrene-butadiene rubber, which makes the mixing and kneading operation difficult and thus possibly makes it difficult to satisfactorily improve physical properties of the rubber composition. More specifically, in a case where the modified styrene-butadiene rubber simultaneously satisfies the requirements related to the weight average molecular weight (Mw) and the number average molecular weight (Mn) thereof described above, as well as the requirement related to the molecular weight distribution thereof, both viscoelasticity and processability of the rubber composition can be improved in a well balanced manner when the modified styrene-butadiene rubber is applied to the rubber composition.

A vinyl bond content of the butadiene portion is preferably $\geq 5$ %, more preferably $\geq 10$ %, and preferably $\leq 60$ % in the modified styrene-butadiene rubber. The glass transition temperature can be adjusted within the preferable range by setting a vinyl bond content of the butadiene portion to be within the ranges described above.

Mooney viscosity (MV) at 100 °C, of the modified styrene-butadiene rubber, is in the range of 40 to 140 and may specifically be in the range of 60 to 100. The modified styrene-butadiene rubber can exhibit better processability when it has Mooney viscosity in the range described above, than otherwise.

The Mooney viscosity can be measured by using a large rotor of a Mooney viscometer such as "MV2000E" manufactured by Monsanto Company at 100 °C and the rotor speed of $2 \pm 0.02$ rpm. The measurement can be carried out by: leaving the modified SBR at the room temperature ($23 \pm 3$ °C) for at least 30 minutes; then collecting a test sample ($27 \pm 3$ g) from the modified SBR; fill the inside of the die cavity with the test sample; and measuring MV of the test sample by operating the platen.

It is preferable that one terminal end of the modified styrene-butadiene rubber has been modified with a modifying agent containing the compound represented by the general formula (1), as described above. In addition, it is preferable that the other terminal end of the modified styrene-butadiene rubber has been modified with a modifying agent containing the compound represented by general formula (2) shown below. It is possible to further improve dispersibility of a filler in the rubber composition and make superior fuel saving performance and superior wet grip performance compatible with each other in a tire having the rubber composition applied thereto at a higher level, by modifying both terminal ends of the modified styrene-butadiene rubber.

[Chemical 22]

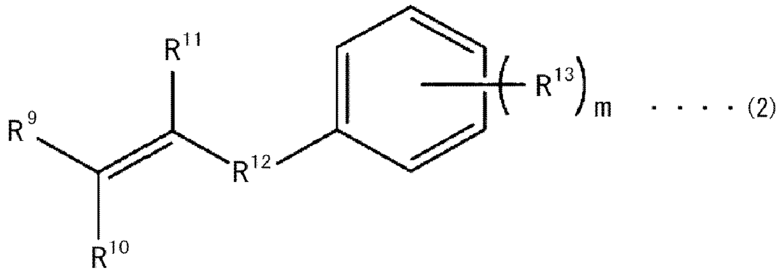

In the general formula (2), each of $R^9$ to $R^{11}$ independently represents: hydrogen; a $C_{1-30}$ alkyl group; a $C_{2-30}$ alkenyl group; a $C_{2-30}$ alkynyl group; a $C_{1-30}$ heteroalkyl group; a $C_{2-30}$ heteroalkenyl group; a $C_{2-30}$ heteroalkynyl group; a $C_{5-30}$ cycloalkyl group; a $C_{6-30}$ aryl group; or a $C_{3-30}$ heterocyclic group.
Further, in the general formula (2), $R^{12}$ represents: single bond; a $C_{1-20}$ alkylene group substituted/unsubstituted with a substituent group; a $C_{5-20}$ cycloalkylene group substituted/unsubstituted with a substituent group; or a $C_{5(6)-20}$ arylene group substituted/unsubstituted with a substituent group. In this respect, the substituent group is a $C_{1-10}$ alkyl group, a $C_{5-10}$ cycloalkyl group, or a $C_{6-20}$ aryl group.
Yet further, in the general formula (2), $R^{13}$ represents: a $C_{1-30}$ alkyl group; a $C_{2-30}$ alkenyl group; a $C_{2-30}$ alkynyl group; a $C_{1-30}$ heteroalkyl group; a $C_{2-30}$ heteroalkenyl group; a $C_{2-30}$ heteroalkynyl group; a $C_{5-30}$ cycloalkyl group; a $C_{6-30}$ aryl group; a $C_{3-30}$ heterocyclic group; or a functional group represented by general formula (2a) or general formula (2b) shown below, wherein "m" represents an integer in the range of 1 to 5, at least one of $R^{13}$(s) is a functional group represented by the general formula (2a) or the general formula (2b), and a plurality of $R^{13}$s may be of either the same type or different types when m is an integer in the range of 2 to 5.

[Chemical 23]

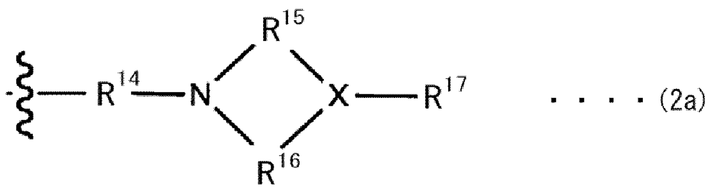

In the general formula (2a), $R^{14}$ represents: a $C_{1-20}$ alkylene group substituted/unsubstituted with a substituent group; a $C_{5-20}$ cycloalkylene group substituted/unsubstituted with a substituent group; or a $C_{6-20}$ arylene group substituted/unsubstituted with a substituent group. In this respect, the substituent group is a $C_{1-10}$ alkyl group, a $C_{5-10}$ cycloalkyl group, or a $C_{6-20}$ aryl group.
Further, In the general formula (2a), each of $R^{15}$ and $R^{16}$ independently represents a $C_{1-10}$ alkyl; a $C_{5-10}$ cycloalkyl group; or a $C_{1-20}$ alkylene group unsubstituted/substituted with a $C_{6-20}$ aryl group.
Yet further, in the general formula (2a), $R^{17}$ represents: hydrogen; a $C_{1-30}$ alkyl group; a $C_{2-30}$ alkenyl group; a $C_{2-30}$ alkynyl group; a $C_{1-30}$ heteroalkyl group; a $C_{2-30}$ heteroalkenyl group; a $C_{2-30}$ heteroalkynyl group; a $C_{5-30}$ cycloalkyl group; a $C_{6-30}$ aryl group; or a $C_{3-30}$ heterocyclic group. "X" represents N, O or S atom, wherein $R^{17}$ does not exist when X is O or S.

[Chemical 24]

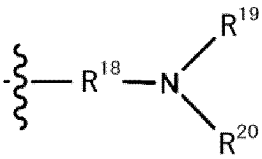

· · · · (2b)

In the general formula (2b), $R^{18}$ represents: a $C_{1-20}$ alkylene group substituted/unsubstituted with a substituent group; a $C_{5-20}$ cycloalkylene group substituted/unsubstituted with a substituent group; or a $C_{6-20}$ arylene group substituted/unsubstituted with a substituent group. In this respect, the substituent group is a $C_{1-10}$ alkyl group, a $C_{5-10}$ cycloalkyl group, or a $C_{6-20}$ aryl group.
Further, in the general formula (2b), each of $R^{19}$ and $R^{20}$ independently represents: a $C_{1-30}$ alkyl group; a $C_{2-30}$ alkenyl group; a $C_{2-30}$ alkynyl group; a $C_{1-30}$ heteroalkyl group; a $C_{2-30}$ heteroalkenyl group; a $C_{2-30}$ heteroalkynyl group; a $C_{5-30}$ cycloalkyl group; a $C_{6-30}$ aryl group; or a $C_{3-30}$ heterocyclic group.

Yet further, in the general formula (2), each of $R^9$ to $R^{11}$ independently represents: hydrogen; a $C_{1-10}$ alkyl group; a $C_{2-10}$ alkenyl group; or a $C_{2-10}$ alkynyl group. $R^{12}$ represents single bond or an unsubstituted $C_{1-10}$ alkylene group. $R^{13}$ represents: a $C_{1-10}$ alkyl group; a $C_{2-10}$ alkenyl group; a $C_{2-10}$ alkynyl group; or a functional group represented by the general formula (2a) or the general formula (2b) shown above. In the general formula (2a), $R^{14}$ represents an unsubstituted $C_{1-10}$ alkylene group, each of $R^{15}$ and $R^{16}$ independently represents an unsubstituted $C_{1-10}$ alkylene group, $R^{17}$ represents: a $C_{1-10}$ alkyl group; a $C_{5-20}$ cycloalkyl group; a $C_{6-20}$ aryl group; or a $C_{3-20}$ heterocyclic group. In the general formula (2b), $R^{18}$ represents an unsubstituted $C_{1-10}$ alkylene group, each of $R^{19}$ and $R^{20}$ may independently represent a $C_{1-10}$ alkyl group; a $C_{5-20}$ cycloalkyl group; a $C_{6-20}$ aryl group; or a $C_{3-20}$ heterocyclic group.

More specifically, the compound represented by the general formula (2) may be any of the compounds represented by structural formulae (2-1)-(2-3) shown below.

[Chemical 25]

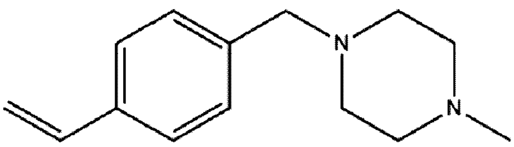

· · · · (2-1)

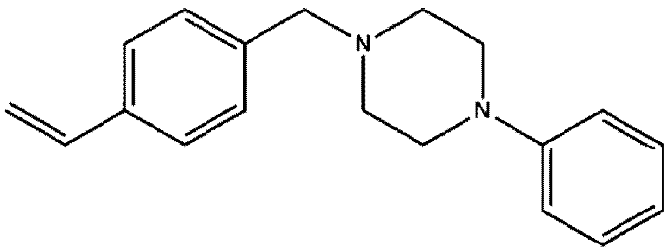

· · · · (2-2)

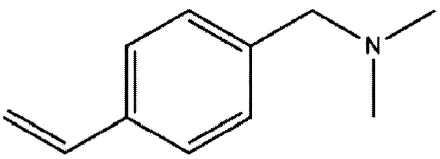

· · · · (2-3)

In a case where the styrene-butadiene copolymer described above is to be modified by using a modifying agent containing the compound represented by the general formula (2), the modifying agent containing the compound represented by the general formula (2) is used as a modification initiator.
Specifically, for example, it is possible to provide the styrene-butadiene copolymer with a modifying group derived from the compound represented by the general formula (2), by polymerizing butadiene monomer and styrene monomer under the presence of a modifying agent containing the compound represented by the general formula (2) in a hydrocarbon solvent.

- Other rubbers -

The rubber component may further include another/other rubber component/components other than the isoprene skeleton rubber and the styrene-butadiene rubber. The total content of such other rubber components is preferably ≤ 35 parts by mass with respect to 100 parts by mass of the rubber component. Examples of the other rubber components include styrene-butadiene rubber having the glass transition temperature equal to or higher than -40 °C, butadiene rubber (BR), chloroprene rubber (CR), butyl rubber (IIR), halogenated butyl rubber, ethylene-propylene rubber (EPR, EPDM), fluororubber, silicone rubber, urethane rubber, and the like. Diene rubber such as butadiene rubber (BR), chloroprene rubber (CR) is preferable and butadiene rubber (BR) is more preferable among those examples.
Further, high cis-polybutadiene is preferable as butadiene rubber (BR), wherein a cis-1,4 bond content of the high cis-polybutadiene is preferably ≥ 90 mass %. In a case where the rubber component includes butadiene rubber, a content of butadiene is preferably in the range of 1 to 35 parts by mass with respect to 100 parts by mass of the rubber component.

(Resin component)

The rubber composition for a tire of the present disclosure contains a resin component. The resin component has been at least partially hydrogenated and a difference in SP value between the resin component and the isoprene skeleton rubber is ≤ 1.40 $(cal/cm^3)^{1/2}$. Further, the rubber composition satisfies the formula shown below,
a mass ratio of the resin component/the isoprene skeleton rubber is ≥ 0.5.
The resin component has been at least partially hydrogenated and is adapted to have a difference in SP value between itself and the isoprene skeleton rubber in the range of ≤ 1.40 $(callcm^3)^{1/2}$, whereby compatibility of the resin component with respect to the isoprene skeleton rubber is enhanced, mobility of the rubber component is well controlled and hysteresis loss (tanδ) in the low temperature range thereof is increased, so that wet grip performance of a tire having the rubber composition applied thereto significantly improves. The difference in SP value between the resin component and the isoprene skeleton rubber is preferably ≤ 1.35 $(callcm^3)^{1/2}$, more preferably ≤ 0.50 $(callcm^3)^{1/2}$, even more preferably ≤ 0.45 $(callcm^3)^{1/2}$, still even more preferably ≤ 0.30 $(callcm^3)^{1/2}$, and particularly preferably ≤ 0.25 $(cal/cm^3)^{1/2}$ in terms of further improving compatibility of the resin component with respect to the isoprene skeleton rubber. Compatibility of the resin component with respect to the isoprene skeleton rubber further improves and thus wet grip performance of a tire having the rubber composition applied thereto further improves when the difference in SP value between the resin component and the isoprene skeleton rubber is ≤ 0.50 $(cal/cm^3)^{1/2}$, than otherwise.
Further, since a mass ratio of the resin component with respect to the isoprene skeleton rubber, i.e., [mass of the resin component/mass of the isoprene skeleton rubber], is ≥ 0.5, wet grip performance of a tire having the rubber composition applied thereto can be further improved. The mass ratio of the resin component with respect to the isoprene skeleton rubber, i.e., [mass of the resin component/mass of the isoprene skeleton rubber], is preferably ≥ 0.65, more preferably ≥ 0.7, even more preferably ≥ 0.8, and preferably ≤ 2.0, more preferably ≤ 1.9, and even more preferably ≤ 1.8.
A content of the resin component is to be in the range of ≥ 1 parts by mass and < 50 parts by mass with respect to 100 parts by mass of the rubber component. The resin component can satisfactorily cause an effect thereof when a content of the resin component in the rubber composition is ≥ 1 parts by mass with respect to 100 parts by mass of the rubber component. The resin component can reliably cause an effect thereof because it is hardly deposited from a tire when a content of the resin component in the rubber composition is < 50 parts by mass with respect to 100 parts by mass of the rubber component. In contrast, fuel saving performance and wear resistance of a tire having the rubber composition applied thereto deteriorate when a content of the resin component in the rubber composition is ≥ 50 parts by mass with respect to 100 parts by mass of the rubber component. A content of the resin component in the rubber composition is preferably ≥ 5 parts by mass, more preferably ≥ 7 parts by mass, even more preferably ≥ 9 parts by mass, still even more preferably ≥ 15 parts by mass, and particularly preferably ≥ 17 parts by mass with respect to 100 parts by mass of the rubber component in terms of further enhancing the effect caused by the resin component. Further, a content of the resin component in the rubber composition is preferably ≤ 45 parts by mass and more preferably ≤ 40 parts by mass with respect to 100 parts by mass of the rubber component in terms of further suppressing deposition of the resin component from a tire and thus suppressing deterioration of appearance of the tire.
It is preferable that the resin component has the softening point higher than 110°C and the weight average molecular weight in terms of polystyrene in the range of 200 to 1,600 g/mol. Wear resistance of a tire can be further enhanced by applying a rubber composition containing such a resin component as described above to the tire. The softening point of the resin component is measured according to JIS-K2207-1996 (the ring and ball (softening point) method).
The weight average molecular weight of the resin component is measured by gel permeation chromatography (GPC) and the relevant value in terms of polystyrene is calculated therefrom.
It is possible to satisfactorily reinforce a tire having the rubber composition applied thereto and thus further enhance wear resistance of the tire when the softening point of the resin component is higher than 110°C. The softening

point of the resin component is more preferably equal to or higher than 116 °C, even more preferably equal to or higher than 120 °C, still even more preferably equal to or higher than 123 °C, and particularly preferably equal to or higher than 127 °C in terms of obtaining satisfactory wear resistance of the tire. The softening point of the resin component is preferably equal to or lower than 160°C, more preferably equal to or lower than 150°C, even more preferably equal to or lower than 145 °C, still even more preferably equal to or lower than 141 °C, and particularly preferably equal to or lower than 136 °C in terms of obtaining satisfactory processability of the product.

The resin component is hardly deposited from a tire, thereby being able to satisfactorily cause an effect thereof as intended, when the weight average molecular weight in terms of polystyrene of the resin component is ≥ 200 g/mol. The resin component is satisfactorily compatible with the rubber component when the weight average molecular weight in terms of polystyrene thereof is ≤ 1,600 g/mol. The weight average molecular weight in terms of polystyrene of the resin component is preferably ≥ 500 g/mol, more preferably ≥ 550 g/mol, even more preferably ≥ 600 g/mol, still even more preferably ≥ 650 g/mol, and particularly preferably ≥ 700 g/mol in terms of suppressing deposition of the resin component from a tire to avoid deterioration of the appearance of a tire. Further, the weight average molecular weight in terms of polystyrene of the resin component is preferably ≤ 1,570 g/mol, more preferably ≤ 1,530 g/mol, even more preferably ≤ 1,500 g/mol, still even more preferably ≤ 1,470 g/mol, yet still even more preferably ≤ 1,430 g/mol, yet still even more preferably ≤ 1,400 g/mol, yet still even more preferably ≤ 1,370 g/mol, yet still even more preferably ≤ 1,330 g/mol, yet still even more preferably ≤ 1,300 g/mol, yet still even more preferably ≤ 1,200 g/mol, yet still even more preferably ≤ 1,100 g/mol, yet still even more preferably ≤ 1,000 g/mol, and particularly preferably ≤ 950 g/mol in terms of improving compatibility of the resin component with the rubber component and thus enhancing the effect caused by the resin component.

A ratio ($Ts_{HR}/Mw_{HR}$) of the softening point of the resin component ($Ts_{HR}$, the unit: °C) with respect to the weight average molecular weight in terms of polystyrene of the resin component ($Mw_{HR}$, the unit: g/mol) is preferably ≥ 0.07, more preferably ≥ 0.083, even more preferably ≥ 0.095, still even more preferably ≥ 0.104, yet still even more preferably ≥ 0.125, yet still even more preferably ≥ 0.135, particularly preferably ≥ 0.14, and most preferably ≥ 0.141. The ratio ($Ts_{HR}/Mw_{HR}$) is preferably ≤ 0.25, more preferably ≤ 0.24, even more preferably ≤ 0.23, still even more preferably ≤ 0.19, yet still even more preferably ≤ 0.18, and particularly preferably ≤ 0.17.

The softening point and the weight average molecular weight in terms of polystyrene of the resin component can be determined by the methods described in Examples discussed below.

The resin component which "has been at least partially hydrogenated" described above represents a resin product obtained by hydrogenating reduction of a resin in the present disclosure.

Examples of the resin as a raw material of the hydrogenated resin component include $C_5$ resin, $C_5$-$C_9$ resin, $C_9$ resin, terpene resin, dicyclopentadiene resin, terpene-aromatic compound-based resin, and the like. Either a single type or combination of two or more types of those examples may be used as the resin as a raw material of the hydrogenated resin component.

Examples of the $C_5$ resin include aliphatic petroleum resin obtained by (co)polymerizing the $C_5$ fractions derived from thermal decomposition of naphtha available in the petrochemical industry.

Examples of the $C_5$ fractions generally include: olefin hydrocarbons such as 1-pentene, 2-pentene, 2-methyl-1-butene, 2-methyl-2-butene, 3-methyl-1-butene; diolefin hydrocarbons such as 2-methyl-1,3-butadiene, 1,2-pentadiene, 1,3-pentadiene, 3-methyl-1,2-butadiene; and the like. Commercially available products can be used as the $C_5$ resin.

The $C_5$-$C_9$ resin represents $C_5$-$C_9$ synthetic petroleum resin and examples thereof include a solid polymer obtained by polymerizing petroleum-derived $C_5$-$C_{11}$ fractions by using a Friedel-Crafts catalyst such as $AlCl_3$, $BF_3$, or the like. Specific examples of the $C_5$-$C_9$ resin include copolymers containing styrene, vinyltoluene, α-methylstyrene, indene, or the like as a main component.

A resin having a relatively low content of $C_{\geq 9}$ components is preferable as the $C_5$-$C_9$ resin in terms of obtaining good compatibility with the rubber component. In the present disclosure, a "relatively low content of $C_{\geq 9}$ components" indicates that a content of $C_{\geq 9}$ components in the resin in entirety thereof is < 50 mass %, preferably ≤ 40 mass %. Commercially available products can be used as the $C_5$-$C_9$ resin.

The $C_9$ resin represents a $C_9$ synthetic petroleum resin and examples thereof include a solid polymer obtained by polymerizing $C_9$ fractions by using a Friedel-Crafts catalyst such as $AlCl_3$, $BF_3$, or the like.

Examples of the $C_9$ resin include copolymers containing indene, α-methylstyrene, vinyltoluene, or the like as a main component.

The terpene resin is a solid resin manufactured by: preparing turpentine oil obtained simultaneously with rosin from a tree in the genus Pinus, or a polymer component separated from turpentine oil; and polymerizing the turpentine oil/the polymer component by using a Friedel-Crafts catalyst. Examples of the terpene resin include β-pinene resin, α-pinene resin, and the like. Representative examples of the terpene-aromatic compound-based resin include terpene-phenol resin. The terpene-phenol resin can be obtained by, for example, a method of causing a terpene and any of various phenols to react with each other by using a Friedel-Crafts catalyst and then optionally subjecting the reaction product to condensation by using formalin. The terpene as a raw material, of which type is not particularly restricted, is preferably a

monoterpene hydrocarbon such as α-pinene, limonene or the like, more preferably a monoterpene hydrocarbon containing α-pinene, and particularly preferably α-pinene. The terpene resin may have styrene or the like in a skeleton thereof.

The dicyclopentadiene resin represents, for example, a resin obtained by polymerizing dicyclopentadiene by using a Friedel-Crafts catalyst such as $AlCl_3$, $BF_3$, or the like.

A resin as a raw material of the hydrogenated resin component may include, for example, a resin (a $C_5$ -DCPD resin) obtained by copolymerizing the $C_5$ fractions and dicyclopentadiene (DCPD).

In this respect, a $C_5$ -DCPD resin containing a dicyclopentadiene-derived component by 50 mass % or more with respect to the total amount thereof is regarded as a dicyclopentadiene resin. A $C_5$ -DCPD resin containing a dicyclopentadiene-derived component by less than 50 mass % with respect to the total amount thereof is regarded as a $C_5$ resin. The same applies to a case where the $C_5$ -DCPD resin further includes a third component (other than $C_5$ fractions and DCPD) by a small amount.

The resin component is: preferably at least one selected from the group consisting of hydrogenated $C_5$ resin, hydrogenated $C_5$-$C_9$ resin, hydrogenated dicyclopentadiene resin (hydrogenated DCPD resin), and hydrogenated terpene resin; more preferably at least one selected from the group consisting of hydrogenated $C_5$ resin and hydrogenated $C_5$-$C_9$ resin; and even more preferably hydrogenated $C_5$ resin, in terms of enhancing compatibility of the resin component with the rubber component, further improving wet grip performance of a tire having the rubber composition applied thereto, and reducing rolling resistance of the tire. Further, the resin component is preferably a resin of which monomer has a hydrogenated DCPD structure or a hydrogenated ring structure.

(Filler)

The rubber composition for a tire of the present disclosure contains a filler therein. The reinforcement property of the rubber composition improves when the rubber composition contains a filler.

A content of a filler in the rubber composition is preferably in the range of 40 to 125 parts by mass with respect to 100 parts by mass of the rubber component. A tire having the rubber composition applied thereto has satisfactory reinforcement property and thus wear resistance thereof is further enhanced when a content of a filler in the rubber composition is ≥ 40 parts by mass with respect to 100 parts by mass of the rubber component. The rubber composition can avoid too high elastic modulus, whereby wet grip performance of a tire having the rubber composition applied thereto satisfactorily improves, when a content of a filler in the rubber composition is ≤ 125 parts by mass with respect to 100 parts by mass of the rubber component. The content of a filler in the rubber composition is more preferably ≥ 45 parts by mass, even more preferably ≥ 50 parts by mass, and still even more preferably ≥ 55 parts by mass with respect to 100 parts by mass of the rubber component in terms of further reducing rolling resistance (improving fuel saving performance) of the tire. Further, the content of a filler in the rubber composition is more preferably ≤ 105 parts by mass, even more preferably ≤ 100 parts by mass, still even more preferably ≤ 95 parts by mass with respect to 100 parts by mass of the rubber component in terms of further improving wet grip performance of the tire.

-- Silica --

The filler preferably includes silica. The filler particularly preferably includes silica of which nitrogen adsorption specific surface area (according to the BET method) is in the range of ≥ 80 $m^2/g$ and < 330 $m^2/g$. It is possible to satisfactorily reinforce a tire having the rubber composition applied thereto and further reduce rolling resistance of the tire by setting the nitrogen adsorption specific surface area (according to the BET method) of silica to be ≥ 80 $m^2/g$. The rubber composition can avoid too high elastic modulus, whereby wet grip performance of a tire having the rubber composition applied thereto further improves, when the nitrogen adsorption specific surface area (according to the BET method) of silica is < 330 $m^2/g$. The nitrogen adsorption specific surface area (according to the BET method) of silica is more preferably ≥ 110 $m^2/g$, even more preferably ≥ 130 $m^2/g$, still even more preferably ≥ 150 $m^2/g$, and particularly preferably ≥ 180 $m^2/g$ in terms of further reducing rolling resistance and enhancing wear resistance of the tire. On the other hand, the nitrogen adsorption specific surface area (according to the BET method) of silica is more preferably ≤ 300 $m^2/g$, even more preferably ≤ 280 $m^2/g$, and particularly preferably ≤ 270 $m^2/g$ in terms of further improving wet grip performance of the tire.

Examples of the silica include wet silica (hydrated silica), dry silica (silicic anhydride), calcium silicate, aluminum silicate, and the like. Wet silica is preferable among those examples. Either a single type or combination of two or more types of those examples may be used as the silica.

A content of silica in the rubber composition is preferably ≥ 40 parts by mass, more preferably ≥ 45 parts by mass, even more preferably ≥ 50 parts by mass, and still even more preferably ≥ 55 parts by mass with respect to 100 parts by mass of the rubber component in terms of further enhancing mechanical strength and wear resistance of the tire. The content of silica in the rubber composition is preferably ≤ 125 parts by mass, more preferably ≤ 105 parts by mass, even more preferably ≤ 100 parts by mass, and still even more preferably ≤ 95 parts by mass with respect to 100 parts by mass of

the rubber component in terms of further improving wet grip performance of the tire.

-- Carbon black --

The filler preferably includes carbon black. Carbon black reinforces the rubber composition, thereby enhancing wear resistance of the rubber composition.

Type of the carbon black is not particularly restricted and examples thereof include GPF, FEF, HAF, ISAF, or SAF grade. Either a single type or combination of two or more types of those examples may be used as the carbon black.

A content of carbon black in the rubber composition is preferably ≥ 1 parts by mass, more preferably ≥ 3 parts by mass, and even more preferably ≥ 5 parts by mass with respect to 100 parts by mass of the rubber component in terms of further enhancing wear resistance of the rubber composition and a tire having the rubber composition applied thereto. Further, the content of carbon black in the rubber composition is preferably ≤ 20 parts by mass and more preferably ≤ 15 parts by mass with respect to 100 parts by mass of the rubber component in terms of ensuring satisfactory workability of the rubber composition.

In a case where the filler contains silica and carbon black, a content of silica with respect to the total amount of silica and carbon black is preferably in the range of ≥ 80 mass % and < 100 mass % and more preferably in the range of ≥ 90 mass % and < 100 mass %. It is possible to enhance mechanical strength and reduce rolling resistance of a tire having the rubber composition applied thereto by setting the aforementioned content of silica to be ≥ 80 mass %.

-- Other fillers --

The filler may further include, for example, inorganic filler such as clay, talc, calcium carbonate, or aluminum hydroxide in addition to silica and carbon black.

It is preferable that the filler includes the other fillers described above therein such that a content of silica in the filler is ≥ 70 mass %. It is possible to enhance mechanical strength and reduce rolling resistance of a tire having the rubber composition applied thereto by setting the aforementioned content of silica to be ≥ 70 mass %. The content of silica in the filler is more preferably ≥ 80 mass %, even more preferably ≥ 85 mass %, and particularly preferably in the range of ≥ 90 mass % and < 100 mass %.

(Styrenic thermoplastic elastomer)

The rubber composition for a tire of the present disclosure may contain a styrenic thermoplastic elastomer (TPS). The styrenic thermoplastic elastomer (TPS) includes a styrenic polymer block (a hard segment) and a conjugated diene polymer block (a soft segment) therein, wherein the styrenic polymer block portions form physical crosslinking therebetween and thus function as crosslinking points, while the conjugated diene polymer blocks impart rubber elasticity to the TPS. Some/all of the double bonds in the conjugated diene polymer block (the soft segment) may be hydrogenated. The styrenic thermoplastic elastomer (TPS) is thermoplastic, while the rubber component (which is preferably a diene rubber) is not thermoplastic. The styrenic thermoplastic elastomer (TPS) is therefore not included into the rubber component in the present disclosure. A content of the styrenic thermoplastic elastomer (TPS) in the rubber composition is preferably in the range of 1 to 30 parts by mass with respect to 100 parts by mass of the rubber component.

Examples of the styrenic thermoplastic elastomer (TPS) include styrene-butadiene-styrene (SBS) block copolymer, styrene-isoprene-styrene (SIS) block copolymer, styrene-butadiene-isoprene-styrene (SBIS) block copolymer, styrene-butadiene (SB) block copolymer, styrene-isoprene (SI) block copolymer, styrene-butadiene-isoprene (SBI) block copolymer, styrene-ethylene-butylene-styrene (SEBS) block copolymer, styrene-ethylene-propylene-styrene (SEPS) block copolymer, styrene-ethylene-ethylene-propylene- styrene (SEEPS) block copolymer, styrene-ethylene-butylene (SEB) block copolymer, styrene-ethylene-propylene (SEP) block copolymer, styrene-ethylene-ethylene-propylene (SEEP) block copolymer, and the like.

(Other components)

In addition to the rubber component, the resin component, the filler, and the styrenic thermoplastic elastomer described above, compounding agents generally employed in the rubber industry, such as silane coupling agent, antioxidant, wax, softening agent, processing aid, stearic acid, zinc oxide (zinc white), vulcanization accelerator, vulcanizing agent, and the like, may be optionally selected and added to the rubber composition for a tire of the present disclosure unless the addition thereof adversely affects the objects of the present disclosure. Commercially available products can be suitably used as those compounding agents.

In a case where the rubber composition for a tire of the present disclosure contains silica, the rubber composition preferably contains a silane coupling agent, so that an effect caused by the silica is enhanced. Examples of the silane

coupling agent include bis(3-triethoxysilylpropyl) tetrasulfide, bis(3-triethoxysilylpropyl) trisulfide, bis(3-triethoxysilylpropyl) disulfide, bis(2-triethoxysilylethyl) tetrasulfide, bis(3-trimethoxysilylpropyl) tetrasulfide, bis(2-trimethoxysilylethyl) tetrasulfide, (3-mercaptopropyl)trimethoxysilane, (3-mercaptopropyl)triethoxysilane, (2-mercaptoethyl)trimethoxysilane, (2-mercaptoethyl)triethoxysilane, 3-trimethoxysilylpropyl-N,N-dimethylthiocarbamoyl tetrasulfide, 3-triethoxysilylpropyl-N,N-dimethylthiocarbamoyl tetrasulfide, 2-triethoxysilylethyl-N,N-dimethylthiocarbamoyl tetrasulfide, 3-trimethoxysilylpropylbenzothiazolyl tetrasulfide, 3-triethoxysilylpropylbenzothiazolyl tetrasulfide, 3-triethoxysilylpropylmethacrylate monosulfide, 3-trimethoxysilylpropylmethacrylate monosulfide, bis(3-diethoxymethylsilylpropyl)tetrasulfide, (3-mercaptopropyl)dimethoxymethylsilane, dimethoxymethylsilylpropyl-N,N-dimethylthiocarbamoyl tetrasulfide, dimethoxymethylsilylpropylbenzothiazolyl tetrasulfide, and the like. A content of the silane coupling agent is preferably in the range of 2 to 20 parts by mass and more preferably in the range of 5 to 15 parts by mass with respect to 100 parts by mass of the silica.

Examples of the antioxidant include N-(1,3-dimethylbutyl)-N'-phenyl-p-phenylenediamine (6C), 2,2,4-trimethyl-1,2-dihydroquinoline polymer (TMDQ), 6-ethoxy-2,2,4-trimethyl-1,2-dihydroquinoline (AW), N,N'-diphenyl-p-phenylenediamine (DPPD), and the like. A content of the antioxidant, which is not particularly restricted, is preferably in the range of 0.1 to 5 parts by mass and more preferably in the range of 1 to 4 parts by mass with respect to 100 parts by mass of the rubber component.

Examples of the wax include paraffin wax, microcrystalline wax, and the like. A content of the wax, which is not particularly restricted, is preferably in the range of 0.1 to 5 parts by mass and more preferably in the range of 1 to 4 parts by mass with respect to 100 parts by mass of the rubber component.

A content of the zinc oxide (zinc white), which is not particularly restricted, is preferably in the range of 0.1 to 10 parts by mass and more preferably in the range of 1 to 8 parts by mass with respect to 100 parts by mass of the rubber component.

Examples of the vulcanization accelerator include sulfenamide-based vulcanization accelerator, guanidine-based vulcanization accelerator, thiazole-based vulcanization accelerator, thiuram-based vulcanization accelerator, dithiocarbamate-based vulcanization accelerator, and the like. Either a single type or combination of two or more types of those examples may be used as the vulcanization accelerator. A content of the vulcanization accelerator, which is not particularly restricted, is preferably in the range of 0.1 to 5 parts by mass and more preferably in the range of 0.2 to 4 parts by mass with respect to 100 parts by mass of the elastomer component.

Examples of the vulcanizing agent include sulfur, and the like. A content of the vulcanizing agent, expressed as a content of sulfur, is preferably in the range of 0.1 to 10 parts by mass and more preferably in the range of 1 to 4 parts by mass with respect to 100 parts by mass of the rubber component.

(Method for manufacturing rubber composition)

A method for manufacturing the rubber composition described above is not particularly restricted. For example, the rubber composition can be manufactured by: blending, mixing and kneading the aforementioned rubber component, the resin component, the filler, and various other components optionally selected according to necessity; and subjecting the mixture thus mixed and kneaded, to warming, extrusion, and the like. Further, a vulcanized rubber can be obtained by vulcanizing the rubber composition thus obtained.

Conditions during the mixing and kneading process are not particularly restricted. Various relevant conditions such as a volume of a raw material to be charged into a kneader, rotational speed of a rotor, ram pressure, temperature and time period in the mixing and kneading process, type of a kneader, and the like can be optionally selected according to the purpose. Examples of the kneader include Banbury mixer, intermix machine, kneader, rolls, and the like, which are generally employed for mixing and kneading of a rubber composition.

Conditions of warming are not particularly restricted, either. Various relevant conditions such as temperature and time period in the warming process, type of a warming device, and the like can be optionally selected according to the purpose. Examples of the warming device include warming rolls and like, which are generally employed for warming of a rubber composition.

Conditions of extrusion are not particularly restricted, either. Various relevant conditions such as extrusion time, extrusion speed, type of an extruder, temperature in the extrusion process, and the like can be optionally selected according to the purpose. Examples of the extruder include an extruder or the like, which is generally employed for extrusion of a rubber composition. The temperature in the extrusion process may be optionally set as required.

Details of a device, a method, conditions, and the like for vulcanization are not particularly restricted and may be optionally decided/selected according to the purpose. Examples of a vulcanizing device include a vulcanizing molding machine provided with a die, which is generally employed for vulcanization of a rubber composition. Temperature, as a condition during the vulcanization process, is, for example, in the range of 100 °C to 190 °C.

< Tread rubber >

A tread rubber of the present disclosure is characterized in that the tread rubber is made of the rubber composition for a tire described above. The tread rubber of the present disclosure, made of the rubber composition for a tire described above, successfully achieves satisfactory wet grip performance, satisfactory fuel saving performance and satisfactory wear resistance of a tire in a very well-balanced manner when it is applied to the tire.

The tread rubber of the present disclosure may be applied to either a new tire or a retreaded tire.

< Tire >

A tire of the present disclosure is characterized in that the tire includes the tread rubber described above. The tire of the present disclosure, including the tread rubber described above therein, successfully achieves satisfactory wet grip performance, satisfactory fuel saving performance and satisfactory wear resistance in a very well-balanced manner.

The tire of the present disclosure may be manufactured, depending on type of the desired tire, by either i) molding the aforementioned rubber composition in an unvulcanized state and subjecting a resulting green tire to vulcanization or ii) subjecting the aforementioned rubber composition to a preliminary vulcanization process, molding a resulting half-vulcanized rubber, and subjecting a resulting tire to a main vulcanization process. The tire of the present disclosure is preferably a pneumatic tire, wherein examples of gas with which the tire is to be inflated include inert gas such as nitrogen, argon, helium or the like, as well as ambient air and air of which oxygen partial pressure has been adjusted.

EXAMPLES

The present disclosure will be described further in detail by Examples hereinafter. The present disclosure is not limited by any means to these Examples.

< Method for analyzing rubber component >

The glass transition temperature (Tg) and a bound styrene content of the styrene-butadiene rubber were determined by the methods described below, respectively. Further, a SP value (Solubility Parameter) was calculated according to Fedors Method for each of natural rubber (isoprene skeleton rubber) and the styrene-butadiene rubber.

(1) Glass transition temperature (Tg)

The glass transition temperature of the styrene-butadiene rubber synthesized as described below was determined by: collecting a sample from the styrene-butadiene rubber; recording a DSC curve of the sample by using "DSC250" manufactured by TA Instruments, with increasing the temperature of the sample from -100 °C at a rate of 20 °C/minute in a helium gas circulation system (50 mL/minute); and regarding the inflection point of the DSC differential curve as the glass transition temperature of the styrene-butadiene rubber.

(2) Bound styrene content

A bound styrene content of the styrene-butadiene rubber thus synthesized was determined by: collecting a sample from the styrene-butadiene rubber; preparing a measurement sample by diluting 100 mg of the sample with chloroform to the volume of 100 mL and dissolving the sample in the chloroform; measuring absorbance due to the phenyl group of styrene at the relevant UV absorption wavelength (in the vicinity of 254 nm); and determining, based on the absorbance thus measured, a bound styrene content (mass %) with respect to the entire sample (100 mass %). A spectrophotometer "UV-2450" manufactured by SHIMADZU CORPORATION was employed as a measuring device.

< Method for analyzing resin component >

The softening point and the weight average molecular weight of the resin component were determined by the methods described below, respectively. Further, a SP value (Solubility Parameter) of the resin component was calculated by Fedors Method.

(3) Softening point

The softening point of the resin component was determined according to JIS-K2207-1996 (the ring and ball (softening point) method).

(4) Weight average molecular weight

The average molecular weight raw data of the hydrogenated resin (the resin component) was first measured by gel permeation chromatography (GPC) under the conditions described below and then the weight average molecular weight in terms of polystyrene, of the resin component, was calculated based on the average molecular weight raw data.

- Column temperature: 40 °C
- Amount of injection: 50 μL
- Carrier and flow rate: Tetrahydrofuran, 0.6 mL/min.
- Sample preparation: approximately 2.5 mg of the resin component was dissolved in 10 mL of tetrahydrofuran

< Preparation of rubber composition samples >

Rubber composition samples of Examples and Comparative Examples were prepared by blending, mixing and kneading the respective components according to the blend formulations shown in Table 1 and Table 2.

< Preparation and evaluation of vulcanized rubber >

The rubber composition samples of Examples and Comparative Examples thus prepared were vulcanized, whereby vulcanized rubber test pieces were obtained. Wet grip performance, fuel saving performance and wear resistance were evaluated by the methods described below, respectively, for each of the vulcanized rubber test pieces thus obtained.

(5) Wet grip performance

A friction coefficient of each of the vulcanized rubber test pieces on a wet asphalt road surface was measured by using a portable skid resistance tester. The evaluation results are shown such that each of the friction coefficient values thus measured (of Examples 1 to 3 and Comp. Examples 1 to 4) is expressed by an index relative to the friction coefficient value of Comp. Example 1 being "100" in Table 1 and each of the friction coefficient values thus measured (of Examples 4 to 7 and Comp. Example 5) is expressed by an index relative to the friction coefficient value of Comp. Example 5 being "100" in Table 2. The larger index value represents the larger friction coefficient and thus the better wet grip performance.

(6) Fuel-saving performance

Loss tangent (tanδ) was measured for each of the vulcanized rubber test pieces by using a viscoelasticity analyzer (manufactured by Rheometric Scientific F.E.) under the conditions of temperature: 50 °C, strain: 1 %, and frequency: 52 Hz. The evaluation results are shown such that the inverse number of each of the tanδ values thus measured (of Examples 1 to 3 and Comp. Examples 1 to 4) is expressed by an index relative to the inverse number of the tanδ value of Comp. Example 1 being "100" in Table 1 and the inverse number of each of the tanδ values thus measured (of Examples 4 to 7 and Comp. Example 5) is expressed by an index relative to the inverse number of the tanδ value of Comp. Example 5 being "100" in Table 2. The larger index value represents the smaller tanδ and thus the better fuel saving performance.

(7) Wear resistance performance

An amount of wear was measured for each of the vulcanized rubber test pieces at the room temperature according to JIS K 6264-2: 2005 by using a Lamboum abrasion tester manufactured by Ueshima Seisakusho Co., Ltd., with a sandpaper attached on an abrasion wheel of the tester, at a slip ratio: 15 %. The evaluation results are shown such that the inverse number of each of the wear amount values thus measured (of Examples 1 to 3 and Comp. Examples 1 to 4) is expressed by an index relative to the inverse number of the wear amount value of Comp. Example 1 being "100" in Table 1 and the inverse number of each of the wear amount values thus measured (of Examples 4 to 7 and Comp. Example 5) is expressed by an index relative to the inverse number of the wear amount value of Comp. Example 5 being "100" in Table 2. The larger index value represents the smaller wear amount and thus the better wear resistance performance.

[Table 1]

| | | | Example 1 | Example 2 | Example 3 | Comp. Example 1 | Comp. Example 2 | Comp. Example 3 | Comp. Example 4 |
|---|---|---|---|---|---|---|---|---|---|
| Blend formulation | Natural rubber *1 | Parts by mass | 20.0 | 35.0 | 50.0 | 65.0 | 35.0 | 55.0 | 65.0 |
| | Low-Tg modified SBR *2 | | 80.0 | 65.0 | 50.0 | 35.0 | 65.0 | 45.0 | – |
| | High-Tg modified SBR *3 | | – | – | – | – | – | – | 35.0 |
| | Silica *4 | | 65.0 | 65.0 | 65.0 | 65.0 | 65.0 | 65.0 | 65.0 |
| | Resin component *5 | | 30.0 | 30.0 | 30.0 | 30.0 | 50.0 | 50.0 | 30.0 |
| | Silane coupling agent *6 | | 6.5 | 6.5 | 6.5 | 6.5 | 6.5 | 6.5 | 6.5 |
| | Antioxidant *7 | | 2.0 | 2.0 | 2.0 | 2.0 | 2.0 | 2.0 | 2.0 |
| | Wax *8 | | 2.0 | 2.0 | 2.0 | 2.0 | 2.0 | 2.0 | 2.0 |
| | Zinc white | | 2.0 | 2.0 | 2.0 | 2.0 | 2.0 | 2.0 | 2.0 |
| | Vulcanization accelerator A *9 | | 0.8 | 0.8 | 0.8 | 0.8 | 0.8 | 0.8 | 0.8 |
| | Vulcanization accelerator B *10 | | 1.7 | 1.7 | 1.7 | 1.7 | 1.7 | 1.7 | 1.7 |
| | Sulfur | | 1.4 | 1.4 | 1.4 | 1.4 | 1.4 | 1.4 | 1.4 |
| Mass ratio of resin component/isoprene skeleton rubber | | – | 1.50 | 0.86 | 0.60 | 0.46 | 1.43 | 0.91 | 0.46 |
| Evaluation | Wet grip performance | Index | 112 | 108 | 106 | 100 | 104 | 103 | 104 |
| | Fuel saving performance | Index | 124 | 107 | 99 | 100 | 98 | 88 | 80 |
| | Wear resistance performance | Index | 111 | 105 | 101 | 100 | 96 | 94 | 87 |

[Table 2]

| | | | Comp. Example 5 | Example 4 | Example 5 | Example 6 | Example 7 |
|---|---|---|---|---|---|---|---|
| Blend formulation | Natural rubber *1 | Parts by mass | 25.0 | 25.0 | 25.0 | 25.0 | 25.0 |
| | Low-Tg modified SBR *2 | | – | 45.0 | 75.0 | 30.0 | 45.0 |
| | Intermediate-Tg modified SBR 1 *11 | | 75.0 | 30.0 | – | 45.0 | – |
| | Intermediate-Tg modified SBR 2 *12 | | – | – | – | – | 30.0 |
| | Silica *4 | | 65.0 | 65.0 | 65.0 | 65.0 | 65.0 |
| | Carbon black *13 | | 5.0 | 5.0 | 5.0 | 5.0 | 5.0 |
| | Resin component *5 | | 30.0 | 30.0 | 30.0 | 30.0 | 30.0 |
| | Silane coupling agent *6 | | 6.5 | 6.5 | 6.5 | 6.5 | 6.5 |
| | Antioxidant *7 | | 2.0 | 2.0 | 2.0 | 2.0 | 2.0 |
| | Wax *8 | | 2.0 | 2.0 | 2.0 | 2.0 | 2.0 |
| | Zinc white | | 2.0 | 2.0 | 2.0 | 2.0 | 2.0 |
| | Vulcanization accelerator A *9 | | 0.8 | 0.8 | 0.8 | 0.8 | 0.8 |
| | Vulcanization accelerator B *10 | | 1.7 | 1.7 | 1.7 | 1.7 | 1.7 |
| | Sulfur | | 1.4 | 1.4 | 1.4 | 1.4 | 1.4 |
| Mass ratio of resin component/isoprene skeleton rubber | | – | 1.20 | 1.20 | 1.20 | 1.20 | 1.20 |
| Evaluation | Wet grip performance | Index | 100 | 100 | 97 | 95 | 93 |
| | Fuel saving performance | Index | 100 | 141 | 138 | 128 | 119 |
| | Wear resistance performance | Index | 100 | 112 | 127 | 116 | 106 |
| | Total (of three performances) | Index | 300 | 353 | 362 | 339 | 318 |

*1 Natural rubber: TSR#20, SP value = 8.20 $(cal/cm^3)^{1/2}$

*2 Low-Tg modified SBR: "hydrocarbyloxysilane compound-modified" styrene-butadiene rubber synthesized by the method described below, Tg = – 65 °C, SP value = 8.65 $(cal/cm^3)^{1/2}$

*3 High-Tg modified SBR: "hydrocarbyloxysilane compound-modified" styrene-butadiene rubber synthesized by the method described below, Tg = – 25 °C, SP value = 9.00 $(cal/cm^3)^{1/2}$

*4 Silica: product name "Nipsil AQ" manufactured by Tosoh Silica Corporation

*5 Resin component: hydrogenated $C_5$ resin, product name "®Impera E1780" manufactured by Eastman Chemical Company, the softening point = 130 °C, the weight average molecular weight (Mw) = 909 g/mol, SP value = 8.35 $(cal/cm^3)^{1/2}$

*6 Silane coupling agent: product name "Si75®" manufactured by Evonik Degussa GmbH

*7 Antioxidant: product name "Nocrac 6C" manufactured by Ouchi-Shinko Chemical Industrial Co., Ltd.

*8 Wax: product name "OZOACE-0701" manufactured by Nippon Seiro Co., Ltd.

*9 Vulcanization accelerator A: product name, "Nocceler DM-P" manufactured by OUCHI SHINKO CHEMICAL INDUSTRIAL CO., LTD.

*10 Vulcanization accelerator B: product name "Sanceler NS-G" manufactured by SANSHIN CHEMICAL INDUSTRY CO., LTD.

*11 Intermediate-Tg modified SBR 1: styrene-butadiene rubber obtainable by using butyllithium as a polymerization initiator, of which terminal end has been modified with N-(1,3-dimethylbutylidene)-3-triethoxysilyl-1-propaneamine, Tg = – 38 °C, SP value = 8.95 $(cal/cm^3)^{1/2}$

*12 Intermediate-Tg modified SBR 2: "hexamethyleneimine-modified" styrene-butadiene rubber having a bound styrene content: 35 mass % and a vinyl bond content in the butadiene portion thereof: 21 %, manufactured by the method for preparing "Polymer K" disclosed in JP 2007-070642 A at a different blend ratio of styrene and butadiene monomers from JP 2007-070642 A, Tg = – 38 °C, SP value = 8.95 $(cal/cm^3)^{1/2}$

*13 Carbon black: product name "#80" manufactured by Asahi Carbon Co., Ltd.

< Method for synthesizing low-Tg modified SBR (*2)

A modified SBR was obtained by:

charging a cyclohexane solution of 1,3-butadiene and a cyclohexane solution of styrene into a dry, nitrogen-substituted pressure-resistant glass vessel having inner volume: 800 mL, such that 67.5 g of 1,3-butadiene and 7.5 g of styrene were present therein;
adding 0.6 mmol of 2,2-ditetrahydrofurylpropane and 0.8 mmol of n-butyllithium to the mixture and carrying out polymerization at 50 °C for 1.5 hours;
adding, when the polymerization conversion ratio in the polymerization reaction system reached substantially 100 %, 0.72 mmol of N,N-bis(trimethylsilyl)-3-[diethoxy(methyl)silyl]propylamine as a modifying agent to the system and carrying out a modification reaction at 50 °C for 30 minutes;
then adding 2 mL of an isopropanol solution of 2,6-di-t-butyl-p-cresol (BHT) (BHT concentration: 5 mass %) to the reaction solution to stop the reaction; and
drying a resulting substance by the conventional method, thereby obtaining a modified SBR.

The microstructures of the modified SBR thus obtained were analyzed. The modified SBR had a bound styrene content of 10 mass % and the glass transition temperature (Tg) of -65 °C.

< Method for synthesizing high-Tg modified SBR (*3) >

(i) Preparation of modification initiator

A modification initiator is obtained by:

preparing two vacuum dried 4L pressure vessels made of stainless steel;
charging 944 g of cyclohexane, 161 g of a compound represented by the structural formula (2-1) shown below, and 86 g of tetramethylethylenediamine into the first pressure vessel, thereby manufacturing a first reaction solution;
charging, simultaneously with manufacturing the first reaction solution, 318 g of n-butyllithium (20 mass %) in the liquid phase and 874 g of cyclohexane into the second pressure vessel, thereby manufacturing a second reaction solution,

wherein the mole ratio of the compound represented by the structural formula (2-1), n-butyllithium, and tetramethylethylenediamine is 1: 1: 1;
injecting the first reaction solution at an injection rate of 1.0 g/min. and the second reaction solution at an injection rate of 1.0 g/min. into a first continuous channel and a second continuous channel of a continuous reactor, respectively, by using mass flowmeters in a state where pressure of each of the pressure vessels is maintained at 7 bar;
maintaining, during the injection operations, the temperature in the continuous reactor at -10 °C and the internal pressure of the continuous reactor at 3 bar by using a back pressure regulator, with controlling time during which the reactants stay in the continuous reactor to be 10 minutes or less; and
collecting a modification initiator by terminating the reaction.

[Chemical 26]

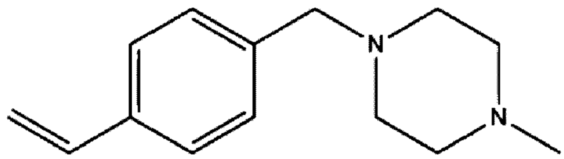

・・・・(2-1)

(ii) Polymerization process

A modified SBR of which both ends have been modified is obtained by:

injecting, into a first reactor of a continuous reactor system in which three reactors are connected in series, i) a styrene solution containing styrene (60 mass %) dissolved in n-hexane at an injection rate of 7.99 kg/h, ii) a 1,3-butadiene solution containing 1,3-butadiene (60 mass %) dissolved in n-hexane at an injection rate of 10.55 kg/h, iii) n-hexane at an injection rate of 47.66 kg/h, iv) a 1,2-butadiene solution containing 1,2-butadiene (2.0 mass %) dissolved in n-hexane at an injection rate of 10 g/h, v) a solution as a polar additive containing 2,2-di(2-tetrahydrofuryl)propane (10 mass %) dissolved in n-hexane at an injection rate of 10.0 g/h, and vi) the modification initiator prepared by the production example described above at an injection rate of 292.50 g/h, with maintaining the temperature of the first reactor at 50 °C during the injection operations;
transferring a resulting polymer from the first reactor to a second reactor through transfer piping when a polymerization conversion rate has reached 43 %;
then injecting, into the second reactor, a 1,3-butadiene solution containing 1,3-butadiene (60 mass %) dissolved in n-hexane at an injection rate of 0.95 kg/h, with maintaining the temperature of the second reactor at 65 °C during the injection operation;
transferring a resulting polymer from the second reactor to a third reactor through transfer piping when a polymerization conversion rate has reached 95 % or higher;
adding a solution of a compound (dissolved in the solution) as a modifying agent represented by the structural formula (1-1) shown below, to (the polymer in) the third reactor (the modifying agent: active Li = 1 : 1 mol), with maintaining the temperature of the third reactor at 65 °C;

[Chemical 27]

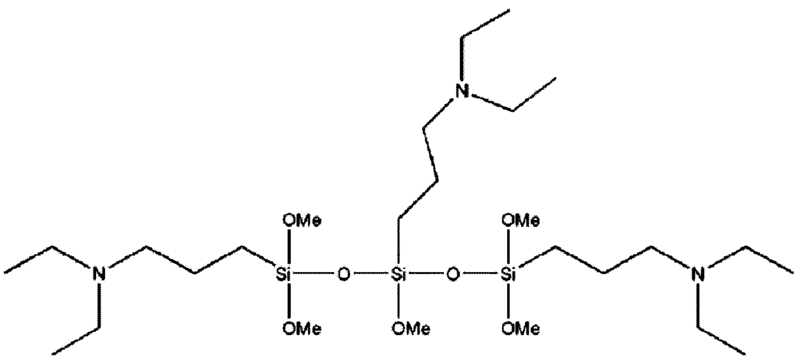

・・・・(1-1)

then injecting, into a polymer solution discharged from the third reactor, a solution containing "IR1520" (30 mass %)

manufactured by BASF SE dissolved therein as antioxidant at an injection rate of 170 g/h, with stirring; and stirring a resulting polymer in warm water heated by steam, to remove the solvents, thereby obtaining a both-ends modified SBR.

The both-ends modified SBR thus obtained had the glass transition temperature (Tg) of -25 °C and a bound styrene content of 41 mass %.

It is understood from Table 1 and Table 2 that the rubber composition of Examples according to the present disclosure can achieve satisfactory wet grip performance, satisfactory fuel saving performance and satisfactory wear resistance performance in a well balanced manner.

In contrast, it is understood that the rubber compositions of Comp. Example 2 and Comp. Example 3, each containing too much resin component, unanimously exhibit poor fuel saving performance and poor wear resistance performance. Further, it is understood that the rubber composition of Comp. Example 4, having a mass ratio of the resin component/the isoprene skeleton rubber of less than 0.5 and using styrene-butadiene rubber of which glass transition temperature is too high, exhibits poor fuel saving performance and poor wear resistance performance.

## Claims

1. A rubber composition for a tire, comprising a rubber component, a resin component, and a filler, wherein:

    the rubber component contains a rubber having isoprene skeleton and a styrene-butadiene rubber;
    the styrene-butadiene rubber has a glass transition temperature lower than -40 °C;
    a bound styrene content in the styrene-butadiene rubber is < 15 mass %;
    a content of the resin component is in the range of ≥ 1 and < 50 parts by mass with respect to 100 parts by mass of the rubber component;
    the resin component has been at least partially hydrogenated and a difference in SP value between the resin component and the isoprene skeleton rubber is ≤ 1.40 $(cal/cm^3)^{1/2}$; and
    the rubber composition satisfies the formula shown below:
    a mass ratio of the resin component/the isoprene skeleton rubber is ≥ 0.5.

2. The rubber composition for a tire of claim 1, wherein a difference in SP value between the resin component and the isoprene skeleton rubber is ≤ 0.5 $(cal/cm^3)^{1/2}$.

3. The rubber composition for a tire of claim 1 or 2, wherein a difference in SP value between the isoprene skeleton rubber and the styrene-butadiene rubber is ≥ 0.3 $(cal/cm^3)^{1/2}$.

4. The rubber composition for a tire of any of claims 1 to 3, wherein a content of the isoprene skeleton rubber is in the range of 1 to 80 parts by mass with respect to 100 parts by mass of the rubber component.

5. The rubber composition for a tire of claim 4, wherein a content of the isoprene skeleton rubber is in the range of 1 to 40 parts by mass with respect to 100 parts by mass of the rubber component.

6. The rubber composition for a tire of any of claims 1 to 5, wherein the styrene-butadiene rubber is modified by a modifying agent having a nitrogen atom-including functional group and an alkoxy group.

7. The rubber composition for a tire of any of claims 1 to 6, wherein the resin component has the softening point higher than 110 °C and the weight average molecular weight in terms of polystyrene in the range of 200 to 1,600 g/mol.

8. The rubber composition for a tire of any of claims 1 to 7, wherein the resin component is at least one selected from the group consisting of hydrogenated $C_5$ resin, hydrogenated $C_{5-}C_9$ resin, hydrogenated dicyclopentadiene resin, and hydrogenated terpene resin.

9. The rubber composition for a tire of any of claims 1 to 8, wherein the styrene-butadiene rubber has a glass transition temperature equal to or lower than -45 °C.

10. The rubber composition for a tire of claim 9, wherein the styrene-butadiene rubber has a glass transition temperature equal to or lower than -50 °C.

11. The rubber composition for a tire of claim 10, wherein the styrene-butadiene rubber has a glass transition temperature equal to or lower than -65 °C.

12. The rubber composition for a tire of any of claims 1 to 11, wherein the styrene-butadiene rubber has a glass transition temperature higher than -90 °C.

13. A tread rubber, **characterized in that** it is made of the rubber composition for a tire of any of claims 1 to 12.

14. A tire, **characterized in that** it has the tread rubber of claim 13.

## Patentansprüche

1. Kautschukzusammensetzung für einen Reifen, umfassend eine Kautschukkomponente, eine Harzkomponente und einen Füllstoff,
wobei:

   die Kautschukkomponente einen Kautschuk enthält, der ein Isopren-Gerüst und einen Styrol-Butadien-Kautschuk aufweist;
   der Styrol-Butadien-Kautschuk eine Glasübergangstemperatur unter -40 °C aufweist;
   ein Gehalt an gebundenem Styrol im Styrol-Butadien-Kautschuk < 15 Masse-% beträgt;
   ein Gehalt der Harzkomponente im Bereich von ≥ 1 und < 50 Masseteilen liegt, bezogen auf 100 Masseteile der Kautschukkomponente;
   wobei die Harzkomponente zumindest teilweise hydriert wurde und die Differenz im SP-Wert zwischen der Harzkomponente und dem Isopren-Grundgerüst-Kautschuk ≤ 1,40 $(cal/cm^3)^{1/2}$ beträgt;
   wobei die Kautschukzusammensetzung die unten gezeigte Formel erfüllt:
   ein Massenverhältnis von Harzkomponente zu Isopren-Grundgerüst-Kautschuk beträgt ≥ 0,5.

2. Kautschukzusammensetzung für einen Reifen nach Anspruch 1, wobei die Differenz im SP-Wert zwischen der Harzkomponente und dem Isopren-Gerüst-Kautschuk ≤ 0,5 $(cal/cm^3)^{1/2}$ beträgt.

3. Kautschukzusammensetzung für einen Reifen nach Anspruch 1 oder 2, wobei die Differenz im SP-Wert zwischen dem Isopren-Gerüst-Kautschuk und dem Styrol-Butadien-Kautschuk ≥ 0,3 $(cal/cm^3)^{1/2}$ beträgt.

4. Kautschukzusammensetzung für einen Reifen nach einem der Ansprüche 1 bis 3, wobei ein Gehalt an Isopren-Gerüst-Kautschuk im Bereich von 1 bis 80 Masseteilen bezogen auf 100 Masseteile der Kautschukkomponente liegt.

5. Kautschukzusammensetzung für einen Reifen nach Anspruch 4, wobei ein Gehalt an Isopren-Gerüst-Kautschuk im Bereich von 1 bis 40 Masseteilen bezogen auf 100 Masseteile der Kautschukkomponente liegt.

6. Kautschukzusammensetzung für einen Reifen nach einem der Ansprüche 1 bis 5, wobei der Styrol-Butadien-Kautschuk durch ein Modifizierungsmittel, das eine stickstoffhaltige funktionelle Gruppe und eine Alkoxygruppe aufweist, modifiziert ist.

7. Kautschukzusammensetzung für einen Reifen nach einem der Ansprüche 1 bis 6, wobei die Harzkomponente einen Erweichungspunkt von über 110 °C und ein gewichtsmittleres Molekulargewicht, bezogen auf Polystyrol, im Bereich von 200 bis 1.600 g/mol aufweist.

8. Kautschukzusammensetzung für einen Reifen nach einem der Ansprüche 1 bis 7, wobei die Harzkomponente mindestens eine ist ausgewählt aus der Gruppe bestehend aus hydriertem $C_5$ Harz, hydriertem $C_5$-$C_9$ Harz, hydriertem Dicyclopentadienharz und hydriertem Terpenharz.

9. Kautschukzusammensetzung für einen Reifen nach einem der Ansprüche 1 bis 8, wobei der Styrol-Butadien-Kautschuk eine Glasübergangstemperatur von gleich oder kleiner als -45 °C aufweist.

10. Kautschukzusammensetzung für einen Reifen nach Anspruch 9, wobei der Styrol-Butadien-Kautschuk eine Glasübergangstemperatur von gleich oder kleiner als -50 °C aufweist.

**11.** Kautschukzusammensetzung für einen Reifen nach Anspruch 10, wobei der Styrol-Butadien-Kautschuk eine Glasübergangstemperatur von gleich oder kleiner als -65 °C aufweist.

**12.** Kautschukzusammensetzung für einen Reifen nach einem der Ansprüche 1 bis 11, wobei der Styrol-Butadien-Kautschuk eine Glasübergangstemperatur von mehr als -90 °C aufweist.

**13.** Laufflächenkautschuk, **dadurch gekennzeichnet, dass** er aus der Kautschukzusammensetzung für einen Reifen nach einem der Ansprüche 1 bis 12 hergestellt ist.

**14.** Reifen, **dadurch gekennzeichnet, dass** er den Laufflächenkautschuk nach Anspruch 13 aufweist.

## Revendications

**1.** Composition de caoutchouc pour un pneumatique, comprenant un composant caoutchouc, un composant résine et une charge,
dans laquelle :

le composant caoutchouc contient un caoutchouc présentant un squelette isoprène et un caoutchouc styrène-butadiène ;
le caoutchouc styrène-butadiène présente une température de transition vitreuse inférieure à -40 °C ;
une teneur en styrène lié dans le caoutchouc styrène-butadiène est < 15 % en masse ;
une teneur du composant résine est dans la plage ≥ 1 et< 50 parties en masse par rapport à 100 parties en masse du composant caoutchouc ;
le composant résine a été au moins partiellement hydrogéné et une différence de valeur SP entre le composant résine et le caoutchouc à squelette isoprène est ≤ 1,40 $(cal/cm^3)^{1/2}$ ; et
la composition de caoutchouc satisfait à la formule indiquée ci-dessous :
un rapport massique du composant résine/caoutchouc à squelette isoprène est ≥ 0,5.

**2.** Composition de caoutchouc pour un pneumatique selon la revendication 1, dans laquelle la différence de valeur SP entre le composant résine et le caoutchouc à squelette isoprène est ≤ 0,5 $(cal/cm^3)^{1/2}$.

**3.** Composition de caoutchouc pour un pneumatique selon la revendication 1 ou 2, dans laquelle la différence de valeur SP entre le caoutchouc à squelette isoprène et le caoutchouc styrène-butadiène est ≥ 0,3 $(cal/cm^3)^{1/2}$.

**4.** Composition de caoutchouc pour un pneumatique selon l'une quelconque des revendications 1 à 3, dans laquelle une teneur du caoutchouc à squelette isoprène est dans la plage de 1 à 80 parties en masse par rapport à 100 parties en masse du composant caoutchouc.

**5.** Composition de caoutchouc pour un pneumatique selon la revendication 4, dans laquelle la teneur en caoutchouc à squelette isoprène est dans la plage de 1 à 40 parties en masse par rapport à 100 parties en masse du composant caoutchouc.

**6.** Composition de caoutchouc pour un pneumatique selon l'une quelconque des revendications 1 à 5, dans laquelle le caoutchouc styrène-butadiène est modifié par un agent modificateur présentant un groupe fonctionnel incluant un atome d'azote et un groupe alcoxy.

**7.** Composition de caoutchouc pour un pneumatique selon l'une quelconque des revendications 1 à 6, dans laquelle le composant résine présente un point de ramollissement supérieur à 110 °C et une masse moléculaire moyenne en poids en termes de polystyrène dans la plage de 200 à 1600 g/mol.

**8.** Composition de caoutchouc pour un pneumatique selon l'une quelconque des revendications 1 à 7, dans laquelle le composant de résine est au moins l'un choisi dans le groupe consistant en résine en $C_5$ hydrogénée, résine en $C_5$-$C_9$ hydrogénée, résine de dicyclopentadiène hydrogénée et résine de terpène hydrogénée.

**9.** Composition de caoutchouc pour un pneumatique selon l'une quelconque des revendications 1 à 8, dans laquelle le caoutchouc styrène-butadiène présente une température de transition vitreuse égale ou inférieure à -45 °C.

**10.** Composition de caoutchouc pour un pneumatique selon la revendication 9, dans laquelle le caoutchouc styrène-butadiène présente une température de transition vitreuse égale ou inférieure à -50 °C.

**11.** Composition de caoutchouc pour un pneumatique selon la revendication 10, dans laquelle le caoutchouc styrène-butadiène présente une température de transition vitreuse égale ou inférieure à -65 °C.

**12.** Composition de caoutchouc pour un pneumatique selon l'une quelconque des revendications 1 à 11, dans laquelle le caoutchouc styrène-butadiène présente une température de transition vitreuse supérieure à -90 °C.

**13.** Caoutchouc de bande de roulement, **caractérisé en ce qu'**il est fabriqué à partir de la composition de caoutchouc pour un pneumatique selon l'une quelconque des revendications 1 à 12.

**14.** Pneu, **caractérisé en ce qu'**il présente le caoutchouc de bande de roulement selon la revendication 13.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2015079703 A1
- JP 2019131648 A
- JP 2018158979 A
- JP 2020059778 A
- WO 2021125242 A1
- WO 2003046020 A
- JP 2007217562 A

### Non-patent literature cited in the description

- **R. R. HAMPTON**. *Analytical Chemistry*, 1949, vol. 21, 923